# EUROPEAN PATENT SPECIFICATION

(11) **EP 3 955 702 B1**
(45) Date of publication and mention of the grant of the patent: **10.06.2026**
(21) Application number: 20786726.8
(22) Date of filing: 10.04.2020
(51) Int. Cl.: B32B 17/10, H05B 3/20, H05B 3/84, B60J 1/00, B60S 1/02, B60S 1/60, C03C 8/02, C03C 8/16, C03C 8/22, C03C 3/087

(54) **WINDSHIELD**
WINDSCHUTZSCHEIBE
PARE-BRISE

(30) Priority: 10.04.2019 JP 2019075199
(43) Date of publication of application: 16.02.2022
(73) Proprietor: Nippon Sheet Glass Company, Limited, Tokyo 108-6321 (JP)
(72) Inventor: CHIBA, Kazuki, Tokyo 108-6321 (JP); SHIMOKAWA, Yohei, Tokyo 108-6321 (JP); OYA, Kazuaki, Tokyo 108-6321 (JP); MIYAMOTO, Yoko, Tokyo 108-6321 (JP); YONEZAWA, Shigeki, Tokyo 108-6321 (JP)
(74) Representative: Mewburn Ellis LLP
(86) International application number: PCT/JP2020/016161
(87) International publication number: WO 2020/209372

(56) References cited:
- WO-A1-2016/129699
- WO-A1-2016/129699
- WO-A1-2018/021499
- WO-A2-03/024155
- DE-U1- 202009 018 502
- JP-A- 2002 020 142
- JP-U- S6 157 067
- US-A1- 2011 155 713

## Description

### Technical Field

The present invention relates to a windshield on which an information acquisition device for acquiring information from the outside of a vehicle by emitting and/or receiving light can be disposed.

### Background Art

In recent years, safety performance of automobiles has dramatically improved. In order to avoid a collision with a preceding vehicle, for example, a safety system is proposed in which the distance to the preceding vehicle and the speed of the preceding vehicle are detected and a brake automatically engages in an abnormal approach to the preceding vehicle. In such a system, the distance to the preceding vehicle and the like are measured using a laser radar or a camera. In general, a laser radar or a camera is disposed on the inner side of a windshield, and the measurements are performed by emitting light such as infrared rays forward (e.g., Patent Literature 1).

### Citation List

### Patent Literature

Patent Literature 1: JP 2006-96331A
Patent Literature 2 :DE202009018502 U1
Patent Literature 3: US2011/155713 A1
Patent Literature 4: WO2016/129699 A1

### Summary of Invention

### Technical Problem

As described above, a measuring apparatus such as a laser radar or a camera is disposed on an inner surface side of a glass plate constituting a windshield, and emits or receives light via the glass plate. Incidentally, the glass plate sometimes fogs up on cold days or in cold regions. However, if the glass plate fogs up, there is a risk that a measuring apparatus may not be able to accurately emit or receive light. Accordingly, the distance between vehicles or the like may not be calculated accurately.

Such an issue may arise not only in devices for measuring the distance between vehicles but also in information acquisition devices in general that acquire information from the outside of a vehicle by receiving light emitted by rain sensors, light sensors, and optical beacons, for example.

The present invention was made in order to resolve the foregoing issues, and it is an object thereof to provide a windshield to which an information acquisition device configured to emit and/or receive light via a glass plate is attachable, the windshield allowing accurate light emission and/or light reception, and allowing accurate information processing.

### Solution to Problem

An aspect of the present invention discloses a windshield according to claim 1.

### Advantageous Effects of Invention

According to the present invention, with a windshield to which an information acquisition device configured to emit and/or receive light via a glass plate is attachable, it is possible to accurately emit and/or receive light and to accurately perform information processing.

### Brief Description of Drawings

FIG. 1 is a plan view showing a first embodiment of a windshield according to the present invention.
FIG. 2 is a cross-sectional view of FIG. 1.
FIG. 3 is a cross-sectional view of a laminated glass.
FIG. 4 is a block diagram showing a schematic configuration of an in-vehicle system.
FIG. 5 is a plan view of the vicinity of an imaging window that shows the arrangement of a heating sheet.
FIG. 6 is a cross-sectional view of FIG. 5 taken along line A-A.
FIG. 7 is a cross-sectional view of an antifog laminate.
FIG. 8 is a plan view showing a heating layer and electrodes according to a first aspect of a second embodiment.
FIG. 9 is a plan view showing a heating layer and electrodes according to a second aspect of the second embodiment.
FIG. 10 is a diagram obtained by calculating, through simulation, the temperatures in the heating sheets according to the first and second embodiments.

### Description of Embodiments

### A. First Embodiment

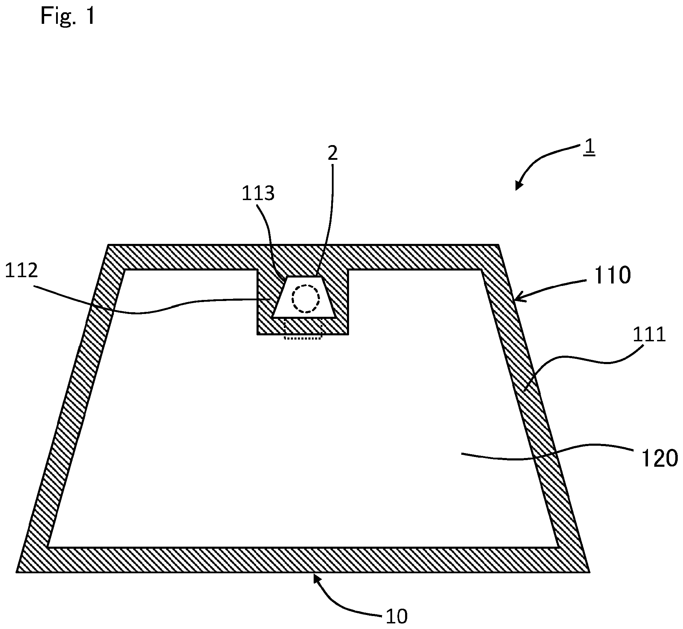

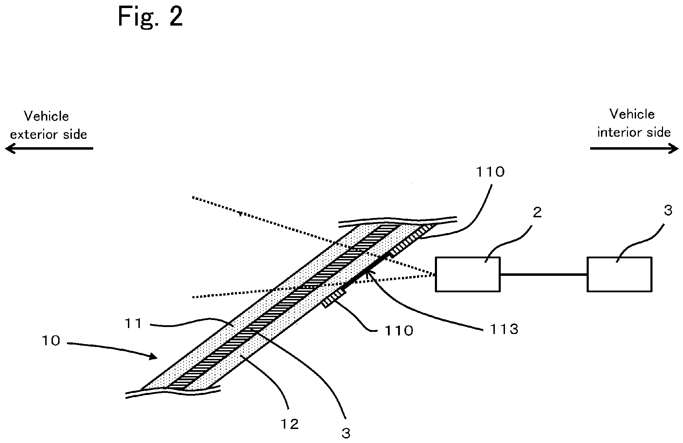

First, the configuration of a first embodiment of a windshield according to this embodiment will be described using FIGS. 1 and 2. FIG. 1 is a plan view of the windshield, and FIG. 2 is a cross-sectional view of FIG. 1. Note that the "up-down direction" in FIG. 1 refers to "upper and lower", "perpendicular", and "vertical", and the "left-right direction" in FIG. 1 refers to "horizontal" for convenience of description. FIG. 1 illustrates a windshield as viewed from the vehicle interior side. That is to say, the back side of the paper plane of FIG. 1 refers to the vehicle exterior side, and the front side of the paper plane of FIG. 1 refers to the vehicle interior side.

This windshield is provided with a substantially rectangular laminated glass 10, and is installed in a vehicle body in an inclined state. Also, an inner surface 130 of this laminated glass 10 that faces the vehicle interior side is provided with a mask layer (a blocking layer) 110 that blocks the field of view from the outside of the vehicle, and an imaging device 2 is disposed such that the mask layer 110 conceals the imaging device 2 from the outside of the vehicle. However, the imaging device 2 is a camera for taking images of the outside of the vehicle. Thus, the mask layer 110 is provided with an imaging window (opening portion) 113 at a position corresponding to the imaging device 2, and the imaging device 2 disposed inside the vehicle can take images of the outside of the vehicle via the imaging window 113.

An image processing device 3 is connected to the imaging device 2, and images taken by the imaging device 2 are processed by the image processing device 3. The imaging device 2 and the image processing device 3 constitute an in-vehicle system 5, and the in-vehicle system 5 can provide various pieces of information to a passenger according to processing performed by the image processing device 3.

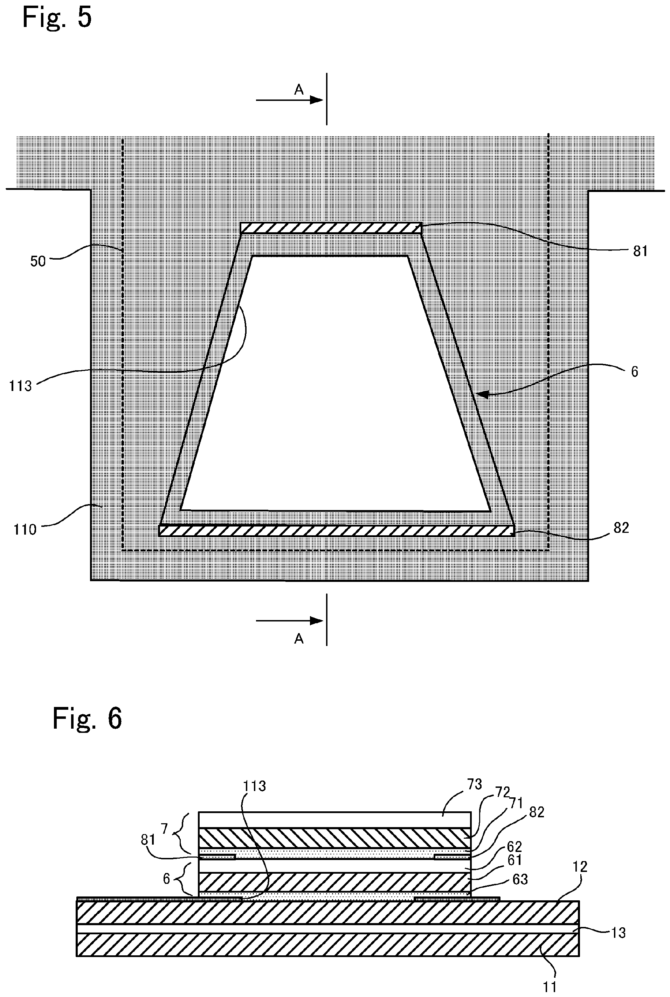

Also, as shown in FIG. 6, which will be described later, a heating sheet 6 is disposed on the surface on the vehicle interior side of the windshield in a region corresponding to the imaging window (information acquisition region) 113, and the windshield is configured to prevent the region of the windshield that corresponds to the imaging window 113 from fogging up and defrosting. Furthermore, an antifog sheet 7 is attached to the surface on the vehicle interior side of the windshield so as to cover the heating sheet 6. Note that the heating sheet 6 and the antifog sheet 7 are not shown in FIGS. 1 and 2. Hereinafter, constituent elements will be described in detail.

### 1. Laminated glass

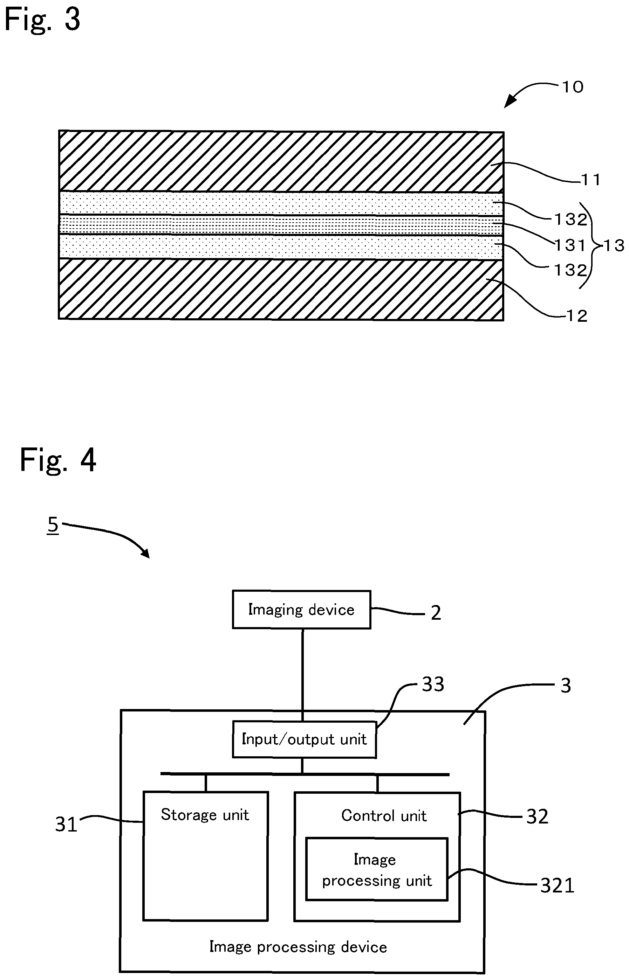

FIG. 3 is a cross-sectional view of a laminated glass. As shown in FIG. 3, this laminated glass 10 includes an outer glass plate 11 and an inner glass plate 12, and a resin interlayer 13 is disposed between the glass plates 11 and 12. Hereinafter, the configuration thereof will be described.

### 1-1. Glass plate

First, the outer glass plate 11 and the inner glass plate 12 will be described. Known glass plates can be used as the outer glass plate 11 and the inner glass plate 12, and these glass plates can also be made of heat-ray absorbing glass, regular clear glass or green glass, or UV green glass. However, the glass plates 11 and 12 are required to attain a visible light transmittance that conforms to the safety standards of a country in which the automobile is to be used. An adjustment can be made so that the outer glass plate 11 ensures a required solar absorptance and the inner glass plate 12 provides a visible light transmittance that meets the safety standards, for example. An example of clear glass, an example of heat-ray absorbing glass, and an example of soda-lime based glass are shown below.

### Clear glass

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R represents an alkali metal)
Total iron oxide (T-Fe₂O₃) in terms of Fe₂O₃: 0.08 to 0.14 mass%

### Heat-ray absorbing glass

With regard to the composition of heat-ray absorbing glass, a composition obtained based on the composition of clear glass by setting the ratio of the total iron oxide (T-Fe₂O₃) in terms of Fe₂O₃ to 0.4 to 1.3 mass%, the ratio of CeO₂ to 0 to 2 mass%, and the ratio of TiO₂ to 0 to 0.5 mass%, and reducing the components (mainly SiO₂ and Al₂O₃) forming the framework of glass by an amount corresponding to the increases in T-Fe₂O₃, CeO₂, and TiO₂ can be used, for example.

### Soda-lime based glass

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO+CaO: 5 to 15 mass%
Na₂O+K₂O: 10 to 20 mass%
SO₃: 0.05 to 0.3 mass%
B₂O₃: 0 to 5 mass%
Total iron oxide (T-Fe₂O₃) in terms of Fe₂O₃: 0.02 to 0.03 mass%

Although there is no particular limitation on the thickness of the laminated glass according to this embodiment, it is possible to set the total thickness of the outer glass plate 11 and the inner glass plate 12 to 2.1 to 6 mm, for example, and, from the viewpoint of weight reduction, the total thickness of the outer glass plate 11 and the inner glass plate 12 is preferably set to 2.4 to 3.8 mm, more preferably 2.6 to 3.4 mm, and particularly preferably 2.7 to 3.2 mm. As described above, there is a need to reduce the total thickness of the outer glass plate 11 and the inner glass plate 12 in order to reduce the weight. Therefore, although there is no particular limitation on the thicknesses of the glass plates, the thicknesses of the outer glass plate 11 and the inner glass plate 12 can be determined as described below, for example.

The outer glass plate 11 is mainly required to have durability and impact resistance against external interference. When this laminated glass is used as a windshield of an automobile, for example, impact-resistance against flying objects such as small stones is required. On the other hand, a larger thickness is not preferable because the weight increases. From this viewpoint, the thickness of the outer glass plate 11 is preferably 1.8 to 2.3 mm, and more preferably 1.9 to 2.1 mm. The thickness to be used can be determined in accordance with the application of the glass plate.

Although the thickness of the inner glass plate 12 can be made equal to that of the outer glass plate 11, the thickness of the inner glass plate 12 can be made smaller than that of the outer glass plate 11 in order to reduce the weight of the laminated glass, for example. Specifically, when the strength of the glass plate is taken into consideration, the thickness is preferably 0.6 to 2.0 mm, more preferably 0.8 to 1.6 mm, and particularly preferably 1.0 to 1.4 mm. Furthermore, the thickness is preferably 0.8 to 1.3 mm. With regard to the inner glass plate 12 as well, the thickness to be used can be determined in accordance with the application of the glass plate.

Here, an example of a method of measuring the thickness of a curved glass plate (laminated glass) 1 will be described. First, with respect to the measurement position, the measurement is performed at two positions: an upper position and a lower position on a center line S extending vertically through the center of a glass plate in the horizontal direction. Although there is no particular limitation on the measuring apparatus, a thickness gauge such as SM-112 manufactured by TECLOCK Corporation can be used, for example. During measurement, the glass plate is disposed such that the curved surface of the glass plate is placed on a flat surface, and an end portion of the glass plate is sandwiched by and measured with the above-mentioned thickness gauge. Note that a flat glass plate can also be measured in the same manner as a curved glass plate.

### 1-2. Interlayer

The interlayer 13 includes at least one layer. For example, as shown in FIG. 3, the interlayer 13 can be configured by three layers, namely a soft core layer 131 and outer layers 132 that are harder than the core layer 131 and between which the core layer 131 is interposed. However, there is no limitation to this configuration, and it is sufficient that the interlayer 13 includes a plurality of layers including the core layer 131 and at least one outer layer 132 disposed on the outer glass plate 11 side. For example, the interlayer 13 including two layers, namely the core layer 131 and one outer layer 132 disposed on the outer glass plate 11 side, or the interlayer 13 in which an even number of two or more of the outer layers 132 are disposed on each side of the core layer 131 so that the core layer 131 is disposed at the center, or the interlayer 13 in which an odd number of outer layers 132 are disposed on one side of the core layer 131 and an even number of outer layers 132 are disposed on the other side so that the core layer 131 is interposed therebetween can also be formed. Note that in the case where only one outer layer 132 is provided, the outer layer 132 is provided on the outer glass plate 11 side as mentioned above, which is for the purpose of improving the breakage resistance performance with respect to an external force from the outside of a vehicle or a building. Also, when the number of outer layers 132 is increased, the sound insulation performance is improved.

There is no particular limitation on the hardness of the core layer 131 as long as the core layer 131 is softer than the outer layer 132. Although there is no particular limitation on the materials constituting the layers 131 and 132, it is possible to select materials based on the Young's modulus, for example. Specifically, at a frequency of 100 Hz and a temperature of 20°C, the Young's modulus is preferably 1 to 20 MPa, more preferably 1 to 18 MPa, and particularly preferably 1 to 14 MPa. When the Young's modulus is set to be in such a range, it is possible to prevent a decrease in STL in a low frequency range of about 3500 Hz or lower. On the other hand, as will be described later, it is preferable that the outer layers 132 have a large Young's modulus for the purpose of improving the sound insulation performance in a high frequency range, and the Young's modulus can be set to 560 MPa or more, 600 MPa or more, 650 MPa or more, 700 MPa or more, 750 MPa or more, 880 MPa or more, or 1300 MPa or more at a frequency of 100 Hz and a temperature of 20°C. Meanshile, there is no particular limitation on the upper limit of the Young's modulus of each of the outer layers 132, but the Young's modulus can be set from the viewpoint of workability, for example. It is empirically known that when the Young's modulus is set to 1750 MPa or more, for example, the workability decreases, and in particular, cutting is difficult.

Also, the outer layers 132 can be made of a polyvinyl butyral resin (PVB) as a specific material, for example. Polyvinyl butyral resin has excellent adhesiveness to the glass plates and penetration resistance and is thus preferable. On the other hand, the core layer 131 can be made of an ethylene vinyl acetate resin (EVA) or a polyvinyl acetal resin, which is softer than the polyvinyl butyral resin constituting the outer layers. When the soft core layer is interposed between the outer layers, the sound insulation performance can be significantly improved while keeping adhesiveness and penetration resistance that are equivalent to those of a single-layered resin interlayer.

In general, the hardness of a polyvinyl acetal resin can be controlled by adjusting (a) the degree of polymerization of polyvinyl alcohol, which is the starting material, (b) the degree of acetalization, (c) the type of plasticizer, (d) the ratio of the plasticizer to be added, and the like. Accordingly, a hard polyvinyl butyral resin that is used for the outer layers 132 and a soft polyvinyl butyral resin that is used for the core layer 131 can be produced with the same polyvinyl butyral resin by appropriately adjusting at least one condition selected from the aforementioned conditions. Furthermore, the hardness of a polyvinyl acetal resin can be controlled based on the type of aldehyde that is used for acetalization and whether co-acetalization using a plurality of kinds of aldehydes or pure acetalization using a single kind of aldehyde is performed. Although not necessarily applicable to every case, the larger the number of carbon atoms of the aldehyde that is used to obtain a polyvinyl acetal resin, the softer the resulting polyvinyl acetal resin tends to be. Accordingly, for example, if the outer layers 132 are made of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer 131. Note that there is no limitation to the above-mentioned resins and the like as long as predetermined Young's moduli can be obtained.

The total thickness of the interlayer 13 is not particularly specified, and is preferably 0.3 to 6.0 mm, more preferably 0.5 to 4.0 mm, and particularly preferably 0.6 to 2.0 mm. Also, the thickness of the core layer 131 is preferably 0.1 to 2.0 mm and more preferably 0.1 to 0.6 mm. Meanwhile, the thickness of each of the outer layers 132 is preferably 0.1 to 2.0 mm and more preferably 0.1 to 1.0 mm. Alternatively, it is also possible to fix the total thickness of the interlayer 13 and adjust the thickness of the core layer 131 without exceeding the fixed total thickness.

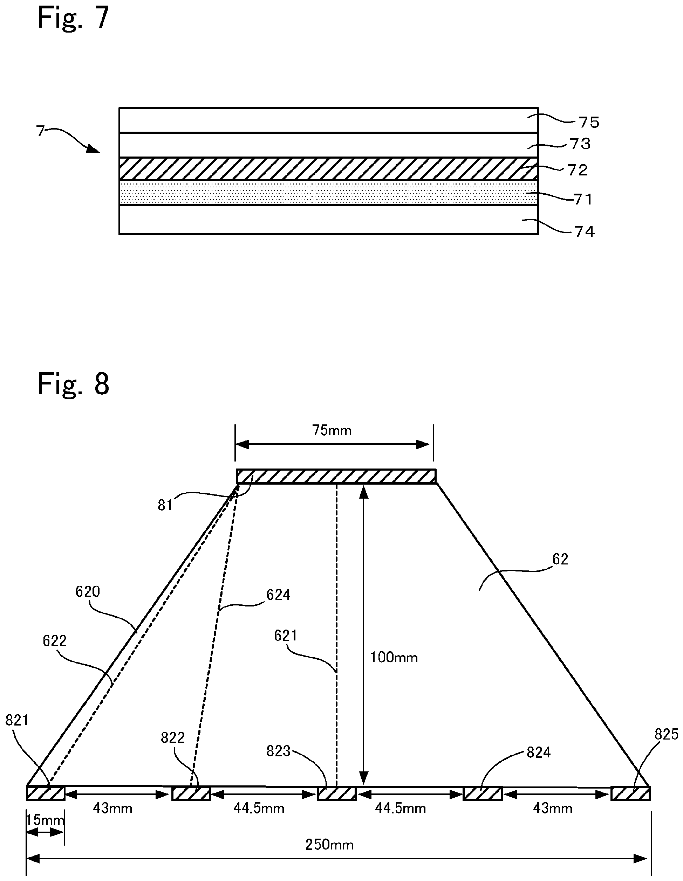

The thicknesses of the core layer 131 and the outer layers 132 can be measured as described below, for example. First, the cross section of a laminated glass is enlarged by a factor of 175 and displayed using a microscope (e.g., VH-5500 manufactured by Keyence Corporation). Then, the thicknesses of the core layer 131 and the outer layers 132 are visually identified and measured. At this time, in order to eliminate variations seen in visual identification, the measurement is performed five times, and average values are taken as the thicknesses of the core layer 131 and the outer layers 132. For example, an enlarged photograph of a laminated glass is taken as shown in FIG. 7, in which the core layer and the outer layers 132 have been identified, and the thicknesses of the identified core layer and outer layers 132 are measured.

Note that the core layer 131 and the outer layers 132 of the interlayer 13 are not required to have a constant thickness over the entire surface. For example, the core layer 131 and the outer layers 132 can also have a wedge shape so as to be suited to a laminated glass that is used for a head-up display. In this case, the thicknesses of the core layer 131 and the outer layers 132 of the interlayer 13 are measured at positions having the smallest thickness, that is, in the lowest side portion of the laminated glass. If the interlayer 13 has a wedge shape, the outer glass plate and the inner glass plate are not disposed in parallel, but it should be construed that such an arrangement is also included in the arrangement of the glass plates of the present invention. That is, the arrangement according to the present invention includes the arrangement of the outer glass plate and the inner glass plate when the interlayer 13 including the core layer 131 and the outer layers 132 whose thicknesses increase at a rate of change of 3 mm or less per meter is used, for example.

Although there is no particular limitation on the method of manufacturing the interlayer 13, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using this method are laminated with a pressing process, a lamination process, or the like. In the method of laminating with the pressing process, the lamination process, or the like, each of the resin films before laminating may have a single-layer structure or a multilayer structure. Also, the interlayer 13 may include a single layer instead of the plurality of layers as mentioned above.

### 2. Mask layer

Next, the mask layer 110 will be described. As shown in FIGS. 1 and 2, in this embodiment, the mask layer 110 is layered on an inner surface (an inner surface of the inner glass plate 12) 130 on the vehicle interior side of the laminated glass 10, and is formed along a peripheral edge portion of the laminated glass 10. Specifically, as shown in FIG. 1, the mask layer 110 according to this embodiment includes a peripheral edge region 111 extending along the peripheral edge portion of the laminated glass 10, and a protruding region 112 that protrudes downward from the upper side of the laminated glass 10 in a rectangular shape. The peripheral edge region 111 blocks light entering from the peripheral edge portion of the windshield. On the other hand, the protruding region 112 conceals the imaging device 2 disposed inside the vehicle from the outside of the vehicle.

However, if the mask layer 110 blocks the imaging range of the imaging device 2, the imaging device 2 cannot take images of situation forward of the vehicle exterior. Thus, in this embodiment, the protruding region 112 of the mask layer 110 is provided with a trapezoidal imaging window (an information acquisition region) 113 at a position corresponding to the imaging device 2 such that the imaging device 2 can take images of the outside of the vehicle. That is to say, the imaging window 113 is provided independently of a non-blocking region 120 on the inner side in the in-plane direction with respect to the mask layer 110. Also, this imaging window 113 is a region where the material of the mask layer 110 is not layered, and thus it is possible to take images of the outside of the vehicle due to the laminated glass having the above-described transmittance of visible light. Note that the size of the imaging window 113 is not particularly limited, and may be set to 7000 mm² or more, for example. Also, as described above, because the windshield is inclined, the imaging window 113 is formed in a shape other than a rectangular shape, that is, a trapezoidal shape in this embodiment.

As described above, the mask layer 110 may also be layered on an inner surface of the outer glass plate 11 and an outer surface of the inner glass plate 12, for example, in addition to being layered on the inner surface of the inner glass plate 12. Also, the mask layer 110 can be layered on two portions (the first blocking layer and the second blocking layer) of the inner surface of the outer glass plate 11 and the inner surface of the inner glass plate 12.

Next, the material of the mask layer 110 will be described. The material of the mask layer 110 may be selected as appropriate according to embodiments as long as it can block the field of view from the outside of the vehicle, and a ceramic material with a dark color such as black, brown, gray, or dark blue may be used, for example.

If a black ceramic material is selected as the material of the mask layer 110, for example, the black ceramic material is layered on the peripheral edge portion of the inner surface 130 of the inner glass plate 12 through screen printing or the like, and the layered ceramic materials are heated together with the inner glass plate 12. Accordingly, it is possible to form the mask layer 110 on the peripheral edge portion of the inner glass plate 12. Also, when a black ceramic material is printed, a region where the black ceramic material is not partially printed is provided. Accordingly, it is possible to form the imaging window 113. Note that various materials can be used as the ceramic material used for the mask layer 110. It is possible to use a ceramic material with a composition shown in Table 1 below for the mask layer 110, for example.

**Table 1**

| | | First and second color ceramic paste |
|---|---|---|
| Pigment*1 | mass% | 10 |
| Resin (cellulosic resin) | mass% | 10 |
| Organic solvent (pine oil) | mass% | 10 |
| Glass binder*2 | mass% | 70 |
| Viscosity | dPs | 150 |

| | | |
|---|---|---|
| *1 Main components: copper oxide, chromium oxide, iron oxide, and manganese oxide *2 Main components: bismuth borosilicate and zinc borosilicate | | |

### 3. In-vehicle system

Next, an in-vehicle system 5 provided with the imaging device (the information acquisition device) 2 and the image processing device 3 will be described using FIG. 4. FIG. 4 shows the configuration of the in-vehicle system 5. As shown in FIG. 4, the in-vehicle system 5 according to this embodiment includes the above-described imaging device 2 and the above-described image processing device 3 connected to the imaging device 2.

The image processing device 3 is a device for processing images taken by the imaging device 2. This image processing device 3 includes general hardware such as a storage unit 31, a control unit 32, and an input/output unit 33 that are connected via a busbar, as a hardware configuration, for example. However, the hardware configuration of the image processing device 3 is not limited to such an example, and, with regard to a specific hardware configuration of the image processing device 3, it is possible to add, or omit and add constituent elements as appropriate according to an embodiment.

The storage unit 31 stores various data and programs used in processing executed by the control unit 32 (not shown). The storage unit 31 may be realized by a hard disk, or a recording medium such as a USB memory, for example. Also, various data and programs stored in the storage unit 31 may be acquired from a recording medium such as a CD (Compact Disc) or a DVD (Digital Versatile Disc). Furthermore, the storage unit 31 may be referred to as an "auxiliary storage".

As described above, the laminated glass 10 is disposed in an inclined orientation with respect to the vertical direction, and is curved. Also, the imaging device 2 takes images of the outside of a vehicle via such a laminated glass 10. Thus, the images taken by the imaging device 2 are deformed according to the orientation, shape, refractive index, optical defects, and the like of the laminated glass 10. Aberrations that are specific to the camera lens of the imaging device 2 also cause deformation. In view of this, the storage unit 31 may store correction data for correcting images that are deformed due to aberrations of the laminated glass 10 and the camera lens.

The control unit 32 includes one or more processors such as a microprocessor or a CPU (Central Processing Unit), and peripheral circuits (a ROM (Read Only Memory), a RAM (Random Access Memory), an interface circuit, and the like) used for processing performed by these processors. The ROM, the RAM, and the like may be called the main storages in the sense that they are located in the address space handled by the processors in the control unit 32. The control unit 32 functions as an image processing unit 321 by executing various data and programs stored in the storage unit 31.

The image processing unit 321 processes images taken by the imaging device 2. Processing performed on the captured images can be selected as appropriate according to an embodiment. The image processing unit 321 may recognize a subject present in a captured image by analyzing the captured image through pattern matching or the like, for example. In this embodiment, in order that the imaging device 2 takes images of situation forward of the vehicle, the image processing unit 321 may further determine whether or not an organism such as a human being is present on the forward side of the vehicle based on this subject recognition. Then, if a person is present on the forward side of the vehicle, the image processing unit 321 may output a warning message, using a predetermined method. Also, the image processing unit 321 may perform a predetermined process on a captured image, for example. Then, the image processing unit 321 may output the processed captured image to a display device (not shown) such as a display connected to the image processing device 3.

The input/output unit 33 is one or more interfaces for transmitting and receiving data to/from a device that is present outside the image processing device 3. The input/output unit 33 is an interface for connecting to a user interface, or an interface of a USB (Universal Serial Bus), for example. Note that the image processing device 3 is connected to the imaging device 2 via the input/output unit 33, and acquires images taken by the imaging device 2 in this embodiment.

In addition to a device designed exclusively for a service to be provided, a general-purpose device such as a PC (Personal Computer) or a tablet terminal may be used as such an image processing device 3.

Also, the above-described imaging device 2 is attached to the windshield via a bracket (not shown), and the bracket is attached to the mask layer 110. Note that the bracket is provided with a notch for allowing passage of light such that light pass therethrough to the imaging device 2. Therefore, attachment of the imaging device 2 to the bracket and attachment of the bracket to the mask layer 110 are adjusted such that the optical axis of the camera of the imaging device 2 passes through the imaging window 113 in this state. Also, a cover (not shown) is attached to the bracket so as to cover the imaging device 2. Therefore, the imaging device 2 is disposed in the space surrounded by the laminated glass 10, the bracket, and the cover, and the imaging device 2 cannot be seen from the vehicle interior side, and only a portion of the imaging device 2 can be seen from the vehicle exterior side through the imaging window 113. Also, the imaging device 2 and the above-described input/output unit 33 are connected to each other by a cable (not shown), and this cable is drawn out from the cover and is connected to the image processing device 3 disposed at a predetermined position in the vehicle. Note that the imaging device 2 may be attached to a cover, instead of the bracket. Also, the bracket preferably has a small area of a portion to be fixed to the mask layer 110 in order to avoid obstruction of the field of view. Therefore, it is likely that the bracket has a shape other than a rectangular shape, in a plan view.

### 4. Heating Sheet

Next, the heating sheet 6 will be described with reference to FIGS. 5 and 6. FIG. 5 is an enlarged plan view of the vicinity of the imaging window to which the heating sheet is attached, and FIG. 6 is a cross-sectional view of FIG. 5 taken along line A-A. Note that a later-described antifog sheet 7 is not shown in FIG. 5, and the antifog sheet 7 is also shown in FIG. 6. As shown in FIGS. 5 and 6, the heating sheet 6 includes a trapezoidal first base film 61, a heating layer (heating element) 62 disposed on an upper surface of the first base film 61, and a first adhesive layer 63 disposed on a lower surface of the first base film 61, and the heating sheet 6 is attached to a surface on the vehicle interior side of the inner glass plate 12 due to the first adhesive layer 63. That is, as shown in FIG. 5, the heating sheet 6 is disposed on the inner glass plate 12 and the mask layer 110 so as to cover the imaging window 113 in this embodiment. That is, the area of the heating sheet 6 is larger than that of the imaging window 113. Also, strip-shaped first electrode 81 and second electrode 82 are respectively attached to the upper and lower sides of this heating sheet 6 along these upper and lower sides. The first electrode 81 and the second electrode 82 may either a positive electrode or a negative electrode as long as their poles are opposite to each other. Hereinafter, each member will be described in detail.

### 4-1. First Base Film

The first base film 61 is formed by a transparent resin film, and can be made of polyethylene terephthalate, polyvinyl chloride, polyvinylidene chloride, polycarbonate, or acrylic resin, for example. Also, the resin may contain an ultraviolet absorbing agent. Also, the thermal conductivity of the first base film 61 is preferably lower than the thermal conductivity of the glass plates 11 and 12. This is because heat generated in the heating layer 62 can be efficiently transferred toward the glass plates 11 and 12. When the thermal conductivity of the first base film 61 is smaller than the thermal conductivity of the glass plates 11 and 12, it is expected that the first base film 61 will function as a heat reservoir to slowly dissipate heat, and thus heat will be uniformly generated in the plane. Therefore, if the thermal conductivity of the first base film 61 is excessively small, the first base film 61 does not function as a heat reservoir, and thus the thermal conductivity of the first base film 61 is preferably 0.1 W/m•K or more, for example. The thermal conductivity of polycarbonate is 0.19 W/m•K, whereas the thermal conductivity of float glass is 1.00 W/m•K, for example. Therefore, it is conceivable that polycarbonate is a good power storage body.

Examples of the ultraviolet absorbing agent include organic substances such as benzotriazole compounds (e.g., 2-(2'-hydroxy-5'-methylphenyl)benzotriazole, and 2-(2'-hydroxy-3',5'-di-t-butylphenyl)benzotriazole), benzophenone compounds (e.g., 2,2',4,4'-tetrahydroxybenzophenone, 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone)), hydroxyphenyltriazine compounds (e.g., 2-(2-hydroxy-4-octoxyphenyl)-4,6-bis(2,4-di-t-buthylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-t-butylphenyl)-s-triazine), and cyanoacrylate compounds (e.g., ethyl-α-cyano-β,β-diphenyl acrylate and methyl-2-cyano-3-methyl-3-(p-methoxyphenyl)acrylate). The ultraviolet absorbing agents may be used alone or in combination of two or more types. Also, the ultraviolet absorbing agent may be at least one type of organic pigment selected from polymethine compounds, imidazoline compounds, coumarin compounds, naphthalimide compounds, perylene compounds, azo compounds, isoindolinone compounds, quinophthalone compounds, and quinoline compounds.

This first base film 61 preferably has a transmittance of 5% or less at a wavelength of 380 nm, and has a transmittance of 50% or less at a wavelength of 400 nm, for example.

Also, the first base film 61 needs to have a certain degree of rigidity because the first base film 61 is a sheet member that supports the heating layer 62. However, if the thickness thereof is excessively large, the haze ratio is likely to be high. On the other hand, if the thickness thereof is small, the first base film 61 poorly functions as a heat reservoir, and the first base film 61 has little effect of uniformly applying heat to the entire surface. Therefore, the first base film 61 preferably has a thickness of 25 to 300 µm, and more preferably has a thickness of 50 to 200 µm, for example.

### 4-2. Heating Layer

The heating layer 62 is a transparent conductive film that is layered on the entire surface of the first base film 61 and generates heat when a voltage is applied to both electrodes. Examples of the material of such a transparent conductive film may include TCOs (Transparent Conductive Oxides) such as ITO, Sb and F-doped SnO₂, Al and Ga-doped zinc oxides, Nb-doped TiO₂, and tungsten oxides, and the material thereof is not limited thereto. Note that the resistance of a TCO may be 3 to 200 Ω/□, for example. This is because, if the resistance thereof is lower than 3 Ω/□, heat is not sufficiently generated, and antifog or defrosting performance is reduced. On the other hand, this is because, if the resistance thereof exceeds 200 Ω/□, there is a risk that heat will be abnormally generated, the glass plate will crack, or devices such as sensors may be adversely affected.

Although such a transparent conductive film is layered on the first base film 61 through sputtering, for example, another lamination method may be used and there is no particularly limitation thereto. In order to improve adhesion between the transparent conductive film 62 and the first base film 61, an undercoat layer may be provided therebetween, for example. Examples of the undercoat layer include SiO₂ and ZrO₂, and the undercoat layer is not limited thereto. Furthermore, in order to prevent short circuits in the transparent conductive film, an insulating layer may be formed on at least a portion of the transparent conductive film. Although examples of the material of the insulating layer include SiO₂, ZrO₂, and polyethylene terephthalate, the material thereof is not particularly limited thereto.

### 4-3. Adhesive Layer

The adhesive layer 63 need only be capable of fixing the first base film 61 to the inner glass plate 12 with sufficient strength. Specifically, it is possible to use an adhesive layer composed of acrylic resin, rubber, or resin that has tackiness, the resin being obtained through copolymerization of a methacrylic monomer and an acrylic monomer, and being set to a desired glass transition temperature, and the like. It is possible to use methyl acrylate, ethyl acrylate, butyl acrylate, stearyl acrylate, 2-ethylhexyl acrylate, and the like as the acrylic monomer, and to use ethyl methacrylate, butyl methacrylate, isobutyl methacrylate, stearyl methacrylate, and the like as the methacrylic monomer. Also, if the adhesive layer is applied through heat lamination or the like, an organic substance that softens at the lamination temperature may be used. When a resin obtained through copolymerization of a methacrylic monomer and an acrylic monomer is used, the glass transition temperature can be adjusted by changing the ratio of blended monomers.

Also, as shown in FIG. 6, the first adhesive layer 63 is preferably thick enough to be able to absorb a level difference that occurs due to the mask layer 110. It is preferable that the thickness of the first adhesive layer 63 is larger than the level difference between the inner glass plate 12 and the mask layer 110, that is, the thickness of the mask layer 110, and is 20 times or less the thickness of the mask layer 110, for example. Therefore, the first adhesive layer 63 may have a thickness of 1 to 300 µm, for example. Also, from the viewpoint of absorbing the level difference, in order to make the first adhesive layer 63 likely to deform, the first adhesive layer 63 may have a shear storage modulus of 1.0×10³ GPa or more and 1.0×10⁷ GPa or less, for example.

Furthermore, the first adhesive layer 63 may have an adhesiveness of 0.25 N/10 mm or more and 12 N/10 mm or less, and preferably has an adhesiveness of 1.0 N/10 mm or more and 10 N/10 mm or less. Accordingly, the heating sheet 6 is firmly attached, and the heating sheet 6 can be easily peeled off and be easily replaced.

Note that although the heating layer 62 and the first base film 61 have the same size in the example shown in FIG. 6, the present invention is not limited thereto. The heating layer 62 can be made smaller than the first base film 61, for example, and in this case, the electrodes 81 and 82 can also be disposed between an outer edge of the first base film 61 and an outer edge of the heating layer 62. Although the heating sheet 6 is larger than the imaging window 113 in the example shown in FIG. 6, the heating sheet 6 may have a size that fits in the imaging window 113. Alternatively, the heating sheet 6 can be disposed such that a portion of the heating sheet 6 protrudes from the imaging window 113.

### 4-4. Electrodes

The electrodes 81 and 82 are each formed in a strip shape extending along the upper side and the lower side of the heating layer 62 thereon, and can be formed by various materials such as copper (or tin-plated copper), gold, aluminum, magnesium, cobalt, tungsten, and silver. In particular, it is preferable to use silver, copper, gold, or aluminum, which is a material having an electrical resistivity of 3.0×10⁻⁸ Ωm or less. Also, the electrodes 81 and 82 can be formed through printing such as screen printing, for example. That is, the electrodes 81 and 82 are formed by applying silver paste or the like through printing and drying the paste. All of the portions of the electrodes 81 and 82 may be formed as a single body through printing or the like, or may be formed by attaching a sheet-shaped material formed by the above-described various materials to the heating sheet 6. Although wires connected to the electrodes 81 and 82 are not shown in FIG. 6, wires can be applied to the electrodes 81 and 82 as appropriate.

The heating sheet 6 and the antifog sheet 7 that are configured as described above are covered by the bracket and the cover, and thus cannot be seen from the inside of the vehicle. FIG. 6 shows an outer edge of a bracket 50. Also, the heating sheet 6 and the antifog sheet 7 are disposed on the mask layer 110, and thus the outer edges thereof cannot be seen from the outside of the vehicle as well. Note that all of the heating sheet 6 and the antifog sheet 7 need not be covered by the bracket 50 and the cover, and a configuration may be adopted in which at least a portion corresponding to the imaging window 113 is covered by the bracket 50 and the cover. Alternatively, a configuration may be adopted in which only portions connected to the electrodes 81 and 82 protrude from the bracket. However, all of the heating sheet 6, the antifog sheet 7, and the wires are preferably covered by the bracket 50 and the cover in order to prevent contact with them inside the vehicle. Also, even if a portion thereof protrudes from the bracket, for example, the portion need only be covered by the cover.

Although the first base film 61, the heating layer 62, and the adhesive layer 63 that constitute the heating sheet 6 are formed in a trapezoidal shape, a length a of the upper side (first side) thereof and a length b of the lower side (second side) thereof preferably satisfy 0.15 ≤ a/b < 1 (Formula (A)). This is because the first electrode 81 and the second electrode 82 respectively have substantially the same length as the upper side and the lower side of the heating layer 62, and thus, when a current flows between electrodes with different lengths, current density may become higher on the short first electrode 81 side than on the second electrode 82 side, and the temperature on the upper side may excessively increase. Note that although it is desired that the heating sheet (the heating layer 62) 6 has a rectangular shape and is provided with electrodes on the opposing sides thereof in order to perform efficient surface heat generation, in this embodiment, the heating sheet 6 has a trapezoidal shape in order to conforms with the shape of the imaging window 113, and in order to increase the adhesion area of the bracket, as will be described later. Due to the heating layer 62 being formed in a trapezoidal shape, power consumption required to increase the temperature to a predetermined temperature is increased compared to that of a rectangular heating layer.

### 5. Antifog Sheet

Next, the antifog sheet 7 will be described in detail. As described above, the antifog sheet 7 is layered on and attached to the heating sheet 6 so as to cover the heating sheet 6. Although the heating sheet 6 and the antifog sheet 7 have the same size in the example shown in FIG. 6, a configuration may be adopted in which the antifog sheet 7 is smaller or larger than the heating sheet 6. That is, the size of the antifog sheet 7 can be changed as appropriate. Also, a configuration may be adopted in which the antifog sheet 7 protrudes from the heating sheet 6 and is disposed on the glass plate 12 or the mask layer 110.

As shown in FIG. 7, the antifog sheet 7 is formed due to a second adhesive layer 71, a second base film 72, and an antifog layer (antifog means) 73 being layered in the stated order. Furthermore, before the antifog sheet 7 is attached to the heating sheet 6, a separable first protective sheet 74 is attached to the second adhesive layer 71, a separable second protective sheet 75 is also attached to the antifog layer 73, and an antifog laminate is constituted by these five layers. Hereinafter, each layer will be described.

### 5-1. Antifog layer

There is no particular limitation on the antifog layer 73 as long as the antifog effect of the laminated glass 10 is achieved, and known antifog layers can be used. In general, the types of antifog layer 73 include a hydrophilic type that turns water generated from water vapor into a water layer on its surface, a water absorbent type that absorbs water vapor, a water-repellent and water absorbent type that suppresses the condensation of water droplets on the surface thereof, and a water repellent type that repels water droplets generated from water vapor, and any types of antifog layer can be used. The following describes an example of a water-repellent and water absorbent antifog layer as an example thereof.

### Organic-inorganic composite antifog layer

An organic-inorganic composite antifog layer is a single-layer film or a laminated multi-layer film formed on a surface of a base film. The organic-inorganic composite antifog layer contains at least a water absorbent resin, a water repellent group, and a metallic oxide component. The antifog film may further contain other functional components as needed. There is no limitation on the type of water absorbent resin as long as a resin that can absorb and hold water is used. The antifog film can be supplied with a water repellent group using a metallic compound containing a water repellent group (water repellent group-containing metallic compound). The antifog film can be supplied with a metallic oxide component using a metallic compound other than the water repellent group-containing metallic compound, minute particles of a metallic oxide, or the like. Hereinafter, these components will be described.

### Water absorbent resin

There is no particular limitation on the water absorbent resin, and examples thereof include polyethylene glycol, polyether resin, polyurethane resin, starch-based resin, cellulosic resin, acrylic resin, epoxy resin, polyester polyol, hydroxyalkyl cellulose, polyvinyl alcohol, polyvinyl pyrrolidone, polyvinyl acetal resin, and polyvinyl acetate. In particular, hydroxyalkyl cellulose, polyvinyl alcohol, polyvinyl pyrrolidone, polyvinyl acetal resin, polyvinyl acetate, epoxy resin, and polyurethane resin are preferable, and polyvinyl acetal resin, epoxy resin, and polyurethane resin are more preferable, and polyvinyl acetal resin is particularly preferable.

Polyvinyl acetal resin can be obtained through acetalization of a product obtained through a condensation reaction of polyvinyl alcohol with an aldehyde. The acetalization of polyvinyl alcohol may be carried out using a known method such as a precipitation method in which an aqueous medium is used in the presence of an acid catalyst, or a dissolution method in which a solvent such as alcohol is used. Acetalization can also be carried out in parallel with saponification of polyvinyl acetate. The degree of acetalization is preferably 2 to 40 mol%, more preferably 3 to 30 mol%, particularly preferably 5 to 20 mol%, and preferably 5 to 15 mol% if necessary. The degree of acetalization can be measured based on ¹³C nuclear magnetic resonance spectroscopy, for example. A polyvinyl acetal resin having a degree of acetalization in the above-described range is suitable for forming an organic-inorganic composite antifog layer having favorable water absorbing properties and water resistance.

The average degree of polymerization of polyvinyl alcohol is preferably 200 to 4500, and more preferably 500 to 4500. A high average degree of polymerization is advantageous in the formation of an organic-inorganic composite antifog layer having favorable water absorbing properties and water resistance, but if the average degree of polymerization is excessively high, the viscosity of the solution will be excessively high, and the formation of a film may be negatively affected. The degree of saponification of the polyvinyl alcohol is preferably 75 to 99.8 mol%.

Examples of the aldehyde condensed with polyvinyl alcohol through a condensation reaction include aliphatic aldehydes such as formaldehyde, acetaldehyde, butyraldehyde, hexylcarbaldehyde, octylcarbaldehyde, and decylcarbaldehyde. Examples thereof also include aromatic aldehydes including benzaldehyde; benzaldehyde subjected to substitution using an alkyl group such as 2-methylbenzaldehyde, 3-methylbenzaldehyde, 4-methylbenzaldehyde, or the like; benzaldehyde subjected to substitution using a halogen atom such as chlorobenzaldehyde or the like; substituted benzaldehyde in which a hydrogen atom is substituted with a functional group such as a hydroxy group, an alkoxy group, an amino group, or a cyano group, other than alkyl groups; and a condensed aromatic aldehyde such as naphtaldehyde or anthraldehyde. Aromatic aldehydes, which are highly hydrophobic, are advantageous in the formation of an organic-inorganic composite antifog layer with a low degree of acetalization and excellent water resistance. Use of aromatic aldehydes is also advantageous in that a film having high water absorbing properties is formed while a large number of hydroxy groups are kept. It is preferable that the polyvinyl acetal resin has an acetal structure derived from an aromatic aldehyde, particularly benzaldehyde.

Examples of the epoxy resin include glycidyl ether-based epoxy resin, glycidyl ester-based epoxy resin, glycidyl amine-based epoxy resin, and cyclic aliphatic epoxy resin. In particular, the cyclic aliphatic epoxy resin is preferable.

Examples of the polyurethane resin include polyurethane resins composed of polyisocyanate and polyol. An acrylic polyol and a polyoxyalkylene polyol are preferable as polyols.

The organic-inorganic composite antifog layer contains water absorbent resin as the main component. In the present invention, the "main component" means a component with the highest content on the basis of mass. From the viewpoint of hardness, water absorbing properties, and antifog properties of a film, the content of the water absorbent resin based on the weight of the organic-inorganic composite antifog layer is preferably 50 wt% or more, more preferably 60 wt% or more, and particularly preferably 65 wt% or more, and preferably 95 wt% or less, and more preferably 90 wt% or less.

### Water repellent group

It is preferable to use a water repellent group, which has high water repellency, in order to sufficiently obtain the above-described effect of the water repellent group. A preferable water repellent group is at least one type selected from (1) chain or cyclic alkyl groups having 3 to 30 carbon atoms and (2) chain or cyclic alkyl groups having 1 to 30 carbon atoms in which at least a portion of hydrogen atoms are substituted with a fluorine atom (also referred to as "fluorine-substituted alkyl groups" hereinafter).

The chain or cyclic alkyl groups in (1) and (2) are preferably chain alkyl groups. The chain alkyl groups may be branched alkyl groups, but are preferably linear alkyl groups. Alkyl groups having more than 30 carbon atoms may lead to an antifog film being opaque. The number of carbon atoms in the alkyl groups is preferably 20 or less, and more preferably 6 to 14 from the viewpoint of balance between the antifog properties, strength, and external appearance of the film. Particularly preferable alkyl groups are linear alkyl groups having 6 to 14 carbon atoms, in particularly, linear alkyl groups having 6 to 12 carbon atoms, such as an n-hexyl group (6 carbon atoms), an n-decyl group (10 carbon atoms), and an n-dodecyl group (12 carbon atoms). The fluorine-substituted alkyl groups in (2) may be groups obtained by substituting only a portion of hydrogen atoms of a chain or a cyclic alkyl group with a fluorine atom, or groups obtained by substituting all of the hydrogen atoms of a chain or a cyclic alkyl group with a fluorine atom, such as linear perfluoroalkyl groups. The fluorine-substituted alkyl groups have high water repellency, and therefore, the effects can be sufficiently obtained by adding a small amount thereof. Note that, when the content of the fluorine-substituted alkyl groups is excessively high, a component containing the fluorine-substituted alkyl groups may be separated from the other components in a coating solution for forming a film.

### Hydrolyzable metallic compound containing water repellent group

In order to blend the water repellent groups into the antifog film, it is sufficient that a metallic compound containing a water repellent group (water repellent group-containing metallic compound), particularly a metallic compound (water repellent group-containing hydrolyzable metallic compound) containing a water repellent group and a hydrolyzable functional group or a halogen atom, or a hydrolysate thereof is added to a coating solution for forming a film. In other words, the water repellent group may be derived from the water repellent group-containing hydrolyzable metallic compound. A water repellent group-containing hydrolyzable silicon compound represented by Formula (I) below is favorably used as the water repellent group-containing hydrolyzable silicon compound.

RₘSiY₄₋ₘ (I)

where R represents a water repellent group, that is, a chain or cyclic alkyl group having 1 to 30 carbon atoms in which at least a portion of hydrogen atoms is optionally substituted with a fluorine atom, and Y represents a hydrolyzable functional group or a halogen atom, and m represents an integer of 1 to 3. The hydrolyzable functional group is at least one type selected from an alkoxyl group, an acetoxy group, an alkenyloxy group, and an amino group, and preferably an alkoxy group, particularly an alkoxy group having 1 to 4 carbon atoms. An example of the alkenyloxy group is an isopropenoxy group. The halogen atom is preferably a chlorine atom. Note that the functional groups shown here as examples can also be used as "hydrolyzable functional groups" described hereinafter. m is preferably 1 or 2.

When the progress of hydrolysis and polycondensation is completed, the compound represented by Formula (I) supplies a component represented by Formula (II) below.

RₘSiO_{(4-m)/2} (II)

where R and m are as described above. In practice, after the hydrolysis and polycondensation have been performed, the compounds represented by Formula (II) form a network structure in which silicon atoms are linked to one another via oxygen atoms, in the antifog film.

As described above, the compounds represented by Formula (I) are hydrolyzed or partially hydrolyzed, and at least portions thereof are polycondensed. Thus, a network structure including siloxane bonds (Si-O-Si) is formed in which silicon atoms and oxygen atoms are alternately linked and that spreads out three-dimensionally. A water repellent group R is linked to the silicon atom contained in this network structure. In other words, the water repellent group R is immobilized in the network structure including siloxane bonds via an R-Si bond. This structure is advantageous in uniform dispersion of the water repellent groups R in the film. The network structure may contain silica components supplied from silicon compounds (e.g., tetraalkoxysilane and silane coupling agents) other than the water repellent group-containing hydrolyzable silicon compound represented by Formula (I). If a silicon compound that does not contain a water repellent group and contains a hydrolyzable functional group or halogen atom (water repellent group-free hydrolyzable silicon compound) is blended together with the water repellent group-containing hydrolyzable silicon compound in a coating solution for forming an antifog film, a network structure including siloxane bonds containing silicon atoms that are linked to water repellent groups and silicon atoms that are not linked to water repellent groups can be formed. With such a structure, it is easy to independently adjust the content of the water repellent group and the content of the metallic oxide component in the antifog film.

The water repellent groups have the effect of enhancing the antifog performance by enhancing water vapor permeability of the surface of the antifog film containing a water absorbent resin. The two functions, namely the water absorbent function and the water repellent function, are contrary to each other, and therefore, conventionally, a water absorbent material and a water repellent material are distributed in separate layers. However, the maldistribution of water near the surface of the antifog layer is resolved due to the water repellent groups, so that the time it takes for dew to condense is prolonged, and the antifog properties of the antifog film having a single-layer structure are thus enhanced. The following is a description of the effects.

Water vapor that has infiltrated the antifog film containing the water absorbent resin forms hydrogen bonds with the hydroxy groups in the water absorbent resin and the like, and is retained in the form of bound water. As the amount of water vapor increases, the form of water vapor changes from bound water to semibound water, and finally, water vapor is retained in the form of free water retained in voids in the antifog film. The water repellent groups prevent the formation of hydrogen bonds and facilitate the dissociation of formed hydrogen bonds in the antifog film. If the content of the water absorbent resin is the same, the number of hydroxy groups capable of forming a hydrogen bond in the film is the same, but the speed of hydrogen bond formation is reduced due to the water repellent groups. Therefore, if the antifog film containing the water repellent groups is used, moisture will ultimately be retained in any of the above-mentioned forms in the antifog film, but water vapor can diffuse to the bottom portion of the film as it is until it is retained therein. Furthermore, water that is once retained dissociates relatively easily and is likely to move to the bottom portion of the film in the form of water vapor. As a result, the distribution of the retained amount of moisture in the thickness direction of the film is relatively uniform between the vicinity of the surface and the bottom portion of the film. That is, the entirety in the thickness direction of the antifog film can be effectively used to absorb water supplied to the surface of the film, and therefore, water droplets are less likely to be formed on the surface thereof through condensation, thus resulting in the enhancement of antifog properties. Also, the antifog film that has absorbed moisture due to water droplets being less likely to form on the surface thereof through condensation is less likely to freeze even in low temperatures. Therefore, when the antifog film is fixed to the imaging window 113, it is possible to secure the field of view of the imaging window 113 in a wide temperature range.

On the other hand, with an antifog film that does not contain the water repellent groups, water vapor that has infiltrated the film is retained significantly easily in the form of bound water, semibound water, or free water. Therefore, water vapor that has infiltrated the antifog film tends to be retained in the vicinity of the surface of the film. As a result, in the film, the amount of moisture is extremely large in the vicinity of the surface, and rapidly decreases toward the bottom portion of the film. That is, although the bottom portion of the film can further absorb water, the vicinity of the surface of the film is saturated with moisture and the moisture condenses into water droplets, and therefore, the antifog properties are limited.

When the water repellent groups are introduced into the antifog film using the water repellent group-containing hydrolyzable silicon compound (see Formula (I)), a network structure including stable siloxane bonds (Si-O-Si) is formed. The formation of this network structure is advantageous from the viewpoint that not only abrasion resistance but also hardness, water resistance, and the like are enhanced.

It is sufficient that the water repellent groups are added in an amount with which the contact angle of water on the surface of the antifog film is 70 degrees or more, preferably 80 degrees or more, and more preferably 90 degrees or more. A measurement value obtained from a 4 mg water droplet dropped onto the surface of the film is taken as the contact angle of water. In particular, when a methyl group or ethyl group, which has slightly low water repellency, is used as the water repellent group, it is preferable to blend, into the antifog film, the repellent groups in an amount with which the contact angle of water is within the above-mentioned range. The upper limit of the contact angle of this water droplet is not particularly limited, and is 150 degrees or less, 120 degrees or less, or 100 degrees or less, for example. It is preferable that the water repellent groups are uniformly contained in the antifog film such that the contact angles of water droplets are within the above-mentioned range over the entire region of the surface of the antifog film.

It is preferable that the antifog film contains the water repellent groups such that the amount of water repellent groups is within a range of 0.05 parts by mass or more, preferably within a range of 0.1 parts by mass or more, and more preferably within a range of 0.3 parts by mass or more, and within a range of 10 parts by mass or less and preferably within a range of 5 parts by mass or less, with respect to 100 parts by mass of the water absorbent resin.

### Inorganic oxide

The inorganic oxide is an oxide of at least one type of element selected from Si, Ti, Zr, Ta, Nb, Nd, La, Ce, and Sn, for example, and preferably includes an oxide of Si (silica). It is preferable that the organic-inorganic composite antifog layer contains the inorganic oxide such that the amount of the inorganic oxide is preferably 0.01 parts by weight or more, more preferably 0.1 parts by weight or more, further preferably 0.2 parts by weight or more, particularly preferably 1 part by weight or more, most preferably 5 parts by weight or more, and 10 parts by weight or more, and 20 parts by weight or more if necessary, and preferably 50 parts by weight or less, more preferably 45 parts by weight or less, further preferably 40 parts by weight or less, particularly preferably 35 parts by weight or less, most preferably 33 parts by weight or less, and 30 parts by weight or less if necessary, with respect to 100 parts by weight of the water absorbent resin. The inorganic oxide is a necessary component for ensuring the strength of the organic-inorganic composite antifog layer, particularly abrasion resistance, but if the content of the inorganic oxide is excessively high, the antifog properties of the organic-inorganic composite antifog layer are impaired.

### Minute particles of inorganic oxide

The organic-inorganic composite antifog layer may further contain minute particles of an inorganic oxide as at least a portion of the inorganic oxide. An inorganic oxide constituting the minute particles of the inorganic oxide is an oxide of at least one type of element selected from Si, Ti, Zr, Ta, Nb, Nd, La, Ce, and Sn, for example, and minute particles of silica are preferable. The minute particles of silica can be introduced into the organic-inorganic composite antifog layer by adding colloidal silica thereto, for example. The minute particles of an inorganic oxide excel at transmitting stress applied to the organic-inorganic composite antifog layer to an article that supports the organic-inorganic composite antifog layer, and have high hardness. Therefore, the addition of the minute particles of an inorganic oxide is advantageous from the viewpoint that the abrasion resistance of the organic-inorganic composite antifog layer is enhanced. Also, when the minute particles of an inorganic oxide are added to the organic-inorganic composite antifog layer, minute voids are formed in portions where the minute particles are in contact with one another or close to one another, and water vapor is likely to be introduced into the film through these voids. Accordingly, the addition of minute particles of an inorganic oxide may advantageously act to enhance the antifog properties. Minute particles of an inorganic oxide that have been formed in advance are added to a coating solution for forming an organic-inorganic composite antifog layer, and the minute particles of an inorganic oxide can thus be supplied to the organic-inorganic composite antifog layer.

When the average particle diameter of the minute particles of an inorganic oxide is excessively large, the organic-inorganic composite antifog layer may be opaque, whereas when the average particle diameter of the minute particles of an inorganic oxide is excessively small, the minute particles aggregate, thus making it difficult to uniformly disperse the minute particles. From this viewpoint, the average particle diameter of the minute particles of an inorganic oxide is preferably 1 to 20 nm, and more preferably 5 to 20 nm. Note that the average particle diameter of the minute particles of an inorganic oxide in the form of primary particles is taken as the average particle diameter of the minute particles of an inorganic oxide described herein. The average particle diameter of the minute particles of an inorganic oxide is determined by measuring, through observation using a scanning electron microscope, the particle diameters of fifty randomly selected minute particles and employing the average value thereof. If the content of the minute particles of an inorganic oxide is excessively high, there is a risk that the amount of water absorption will decrease in the entire organic-inorganic composite antifog layer, and thus the organic-inorganic composite antifog layer will become opaque. It is preferable to add the minute particles of an inorganic oxide such that the amount thereof is preferably 0 to 50 parts by weight, more preferably 2 to 30 parts by weight, further preferably 5 to 25 parts by weight, and particularly preferably 10 to 20 parts by weight with respect to 100 parts by weight of the water absorbent resin.

### Hydrolyzable metallic compound containing no water repellent groups

The antifog film may contain a metallic oxide component derived from a hydrolyzable metallic compound that does not contain a water repellent group (water repellent group-free hydrolyzable compound). A preferable water repellent group-free hydrolyzable metallic compound is a hydrolyzable silicon compound that does not contain a water repellent group. The hydrolyzable silicon compound that does not contain a water repellent group is at least one type of silicon compound (note that a water repellent group is not contained) selected from silicon alkoxide, chlorosilane, acetoxysilane, alkenyloxysilane, and aminosilne, and silicon alkoxide that does not contain a water repellent group is preferable. Note that an example of the alkenyloxysilane is isopropenoxysilane.

The hydrolyzable silicon compound that does not contain a water repellent group may be a compound represented by Formula (III) below.

SiY₄ (III)

As described above, Y represents a hydrolyzable functional group, and is preferably at least one selected from an alkoxyl group, an acetoxy group, an alkenyloxy group, an amino group, and a halogen atom.

The water repellent group-free hydrolyzable metallic compounds are hydrolyzed or partially hydrolyzed, and at least portions thereof are polycondensed. Thus, a metallic oxide component in which metallic atoms and oxygen atoms are linked is supplied. This component firmly joins minute particles of a metallic oxide and the water absorbent resin to each other, and may contribute to an increase in the abrasion resistance, hardness, water resistance, and the like of the antifog film. It is preferable to set the amount of metallic oxide component derived from the hydrolyzable metallic compound that does not contain a water repellent group to be within a range of 0 to 40 parts by mass, preferably 0.1 to 30 parts by mass, more preferably 1 to 20 parts by mass, particularly preferably 3 to 10 parts by mass, and 4 to 12 parts by mass if necessary, with respect to 100 parts by mass of the water absorbent resin.

A preferable example of the hydrolyzable silicon compound that does not contain a water repellent group is tetraalkoxysilane, and more specifically, tetraalkoxysilane containing an alkoxy group having 1 to 4 carbon atoms. The tetraalkoxysilane is at least one selected from tetramethoxysilane, tetraethoxysilane, tetra-n-propoxysilane, tetraisopropoxysilane, tetra-n-butoxysilane, tetraisobutoxysilane, tetra-sec-butoxysilane, and tetra-tert-butoxysilane, for example.

If the content of the metallic oxide (silica) component derived from tetraalkoxysilane is excessively high, the antifog properties of the antifog film may be impaired. One reason for this is that the flexibility of the antifog film is impaired, and thus the swelling and shrinkage of the film caused by the absorption and discharge of moisture are limited. It is preferable to add the metallic oxide component derived from tetraalkoxysilane such that the amount thereof is within a range of 0 to 30 parts by mass, preferably 1 to 20 parts by mass, and more preferably 3 to 10 parts by mass, with respect to 100 parts by mass of the water absorbent resin.

Another preferable example of the hydrolyzable silicon compound that does not contain a water repellent group is a silane coupling agent. The silane coupling agent is a silicon compound containing active functional groups that are different from each other. It is preferable that a portion of the active functional groups are hydrolyzable functional groups. An example of the silane coupling agent is a silicon compound containing an epoxy group and/or an amino group and a hydrolyzable functional group. Preferable examples of the silane coupling agent include glycidyloxyalkyltrialkoxysilane and aminoalkyltrialkoxysilane. It is preferable that, in these silane coupling agents, an alkylene group that is directly linked to a silicon atom has 1 to 3 carbon atoms. Because a glycidyloxyalkyl group and an aminoalkyl group contain a hydrophilic functional group (epoxy group, amino group), they are not water-repellent as a whole even though they contain an alkylene group.

The silane coupling agent firmly couples water absorbent resin, which is an organic component, and the minute particles of a metallic oxide and the like, which are inorganic components, and may contribute to the enhancement of the abrasion resistance, hardness, water resistance, and the like of the antifog film. However, when the content of the metallic oxide (silica) component derived from the silane coupling agent is excessively high, the antifog properties of the antifog film are impaired, and the antifog film may be opaque in some cases. It is preferable to add the metallic oxide component derived from the silane coupling agent such that the amount thereof is within a range of 0 to 10 parts by mass, preferably 0.05 to 5 parts by mass, and more preferably 0.1 to 2 parts by mass, with respect to 100 parts by mass of the water absorbent resin.

### Cross-linked structure

The antifog film may also include a cross-linked structure formed using a cross-linking agent, preferably at least one type of cross-linking agent selected from an organic boron compound, an organic titanium compound, and an organic zirconium compound. The introduction of the cross-linked structure enhances the abrasion resistance, scratch resistance, and water resistance of the antifog film. From another viewpoint, the introduction of the cross-linked structure facilitates an improvement in the durability of the antifog film without impairing the antifog properties of the antifog film.

When the cross-linked structure formed using a cross-linking agent is introduced into the antifog film in which the metallic oxide component is a silica component, the antifog film may contain a metallic atom other than silicon, preferably boron, titanium, or zirconium, in addition to silicon, as metallic atoms.

There is no particular limitation on the type of cross-linking agent as long as the used water absorbent resin can be cross-linked. Here, only examples of the organic titanium compound will be listed. The organic titanium compound is at least one selected from a titanium alkoxide, a titanium chelate-based compound, and titanium acylate, for example. Examples of the titanium alkoxide include titanium tetraisopropoxide, titanium tetra-n-butoxide, and titanium tetraoctoxide. Examples of the titanium chelate compound include titanium acetylacetonate, titanium ethyl acetoacetate, titanium octyleneglycol, titanium triethanolamine, and titanium lactate. The titanium lactate may be an ammonium salt thereof (titanium lactate ammonium). An example of the titanium acylate is titanium stearate. A preferable organic titanium compound is a titanium chelate compound, particularly titanium lactate.

When the water absorbent resin is polyvinyl acetal, a preferable cross-linking agent is an organic titanium compound, particularly titanium lactate.

### Other optional components

Other additives may also be blended into the antifog film. Examples of the additives include glycols such as glycerin and ethylene glycol that have the function of improving the antifog properties. A surfactant, a leveling agent, an ultraviolet absorbing agent, a coloring agent, an antifoaming agent, an antiseptic agent, and the like may be used as an additive.

### Film Thickness

It is sufficient that the film thicknesses of the organic-inorganic composite antifog layer is adjusted as appropriate according to required antifog properties and the like. The film thickness of the organic-inorganic composite antifog layer is preferably 2 to 20 µm, more preferably 2 to 15 µm, and further preferably 3 to 10 µm.

Note that the above-described antifog layer is an example, and it is possible to use other known antifog layers, and to use various antifog layers such as the antifog layer described in JP 2001-146585A, for example.

### 5-2. Second Base Film

The second base film 72 is formed by a transparent resin film, and can be made of a material having the same composition as that of the above-described first base film 61, or a material having similar physical properties. Also, as will be described later, the second base film 72 is preferably made of a material having thermal conductivity that is lower than that of the glass plates 11 and 12 so as to suppress heat dissipation from the heating sheet 6 to the vehicle interior side and facilitate heat transfer toward the glass plate 11 and 12. Specifically, the thermal conductivity of the second base film 72 is preferably 1.0 W/(m•K) or less, more preferably 0.7 W/(m•K) or less, and particularly preferably 0.5 W/(m•K) or less.

Also, the second base film 72 needs to have a certain degree of rigidity because the second base film 72 supports the antifog layer 73. Also, if the second base film 72 is thick, the amount of heat transferred to the vehicle interior side is reduced, and the amount of heat dissipated to the vehicle interior side is suppressed. Therefore, heat is likely to be transferred to the vehicle exterior side, which is advantageous for defrosting and the like. However, if the thickness thereof is excessively large, the haze ratio is likely to be high. Also, the antifog sheet 7 is unlikely to conform to the level difference, and air is likely to be accumulated at the level difference. Therefore, the second base film 72 preferably has a thickness of 25 to 300 µm, for example.

### 5-3. Second Adhesive Layer

As will be described later, the second adhesive layer 71 need only be capable of fixing the second base film 72 to the heating sheet 6 with sufficient strength, and the second adhesive layer 71 can be made of the same material as that of the first adhesive layer 63.

Note that, as shown in FIG. 6, the second adhesive layer 71 is preferably thick enough to be able to absorb a level difference between the heating layer 62 on the heating sheet 6 and the electrodes 81 and 82. It is preferable that the thickness of the second adhesive layer 71 is larger than the level difference between the heating layer 62 and the electrodes 81 and 82, that is, the thickness of the electrodes 81 and 82, and is 20 times or less the thickness of the electrodes 81 and 82, for example. Therefore, the second adhesive layer 71 may have a thickness of 1 to 500 µm, for example.

The thickness of the second adhesive layer 71 set in this manner can be used in the same manner in order to absorb various level differences occurring on objects to be attached. If the heating layer 62 is smaller than the first base film 61 in the heating sheet 6, for example, the electrodes 81 and 82 may be directly disposed on the first base film 61. Therefore, in this case, the thickness of the second adhesive layer 71 is preferably set to the above-described thickness in order to absorb a level difference between the first base film 61 and the electrodes 81 and 82. Also, if the heating sheet 6 is smaller than the imaging window 113 and the antifog sheet 7 is larger than the heating sheet 6, the antifog sheet 7 may cover the level difference between the inner glass plate 12 and the heating sheet 6, or the level difference between the inner glass plate 12 and the mask layer 110. In this case, it is preferable to set the thickness of the second adhesive layer 71 in order to absorb these level differences.

Also, from the viewpoint of absorbing the level difference, in order to make the second adhesive layer 71 likely to deform, the second adhesive layer 71 may have a shear storage modulus of 1.0×10³ GPa or more and 1.0×10⁷ GPa or less, for example. Also, as described above, the adhesiveness of the second adhesive layer 71 may be the same as that of the first adhesive layer 63.

### 5-4. Protective sheet

A first protective sheet 74 is for protecting the adhesive layer 71 until the first protective sheet 74 is fixed to the imaging window 113 of the laminated glass 10, and the first protective sheet 74 is constituted by a resin sheet to which a release agent such as silicone or the like is applied, for example. Similarly, a second protective sheet 75 is for protecting the antifog layer 73 until the second protective sheet 75 is fixed to the imaging window of the laminated glass, and the second protective sheet 75 is constituted by a resin sheet to which a release agent is applied. A known general release sheet can be adopted in either case.

### 6. Method for manufacturing windshield

Next, a method for manufacturing a windshield will be described. First, the mask layer 110 is layered on at least one of the outer glass plate 11 and the inner glass plate 12 formed in predetermined shapes. Then, these glass plates 11 and 12 are shaped to be curved. Although there is no particular limitation on the method therefor, known press-molding can be used, for example. Alternatively, once the outer glass plate 11 and the inner glass plate 12 have been placed on each other on a mold, the mold is heated by passing the mold through a heating furnace. Accordingly, the glass plates 11 and 12 can be curved under their own weight.

After the outer glass plate 11 and the inner glass plate 12 are molded in this manner, a laminate is formed in which the interlayer 13 is interposed between the outer glass plate 11 and the inner glass plate 12. Note that the interlayer 13 is larger than the glass plates 11 and 12.

Then, the laminate is placed into a rubber bag, and preliminarily bonding is carried out at about 70°C to 110°C under vacuum suction. Preliminary bonding can be carried out using a method other than this method, and the following method can also be adopted. The above-described laminate is heated in an oven at 45°C to 65°C, for example. Subsequently, this laminate is pressed by a roll at 0.45 to 0.55 MPa. Then, the laminate is heated in an oven again at 80°C to 105°C, and is then pressed again by a roll at 0.45 to 0.55 MPa. Preliminary bonding is completed in this manner.

Then, permanent bonding is performed. The preliminarily bonded laminate is permanently bonded using an autoclave at a pressure of 8 to 15 atm and at 100°C to 150°C, for example. Specifically, permanent bonding can be performed under the conditions of 14 atm of pressure and a temperature of 135°C, for example. The interlayer 13 is bonded to the glass plates 11 and 12 through preliminary bonding and permanent bonding described above. Then, the interlayer 13 that protrudes from the outer glass plate 11 and the inner glass plate 12 is cut off.

Then, the above-described heating sheet 6 is attached to the inner glass plate 12 due to the first adhesive layer 63. At this time, the heating sheet 6 is positioned so as to be disposed at a position corresponding to the imaging window 113. Ultimately, the above-described antifog sheet 7 is attached to the heating sheet 6. First, an antifog laminate is prepared, and the first protective sheet 74 attached to the second adhesive layer 71 is removed therefrom. Then, the exposed second adhesive layer 71 is attached to the heating sheet 6. Ultimately, the second protective sheet 75 is removed to expose the antifog layer 73, and thus attachment of the antifog sheet 7 is completed. Note that there is no particular limitation on the timings when the heating sheet 6 and the antifog sheet 7 are attached, and they may be attached after the bracket is attached. Also, after the heating sheet 6 and the antifog sheet 7 are attached to the imaging window 113 and the bracket is attached, the second protective sheet 75 may be removed. Alternatively, the antifog sheet 7 can be attached to the heating sheet 6 in advance, and the resulting heating sheet 6 may be attached to the inner glass plate 12.

### 7. Features

According to the above-described windshield, it is possible to obtain the following effects.
(1) As a result of the heating sheet 6 being provided so as to cover the imaging window 113, it is possible to prevent the laminated glass 10 in the imaging window 113 from fogging up. Furthermore, the laminated glass 10 can be defrosted by the heating sheet 6. Thus, when light is received by the imaging device 2 via the imaging window 113, it is possible to prevent flaws such as hindering the passage of light due to the imaging window 113 being fogged up and thereby being unable to make accurate measurements. As a result, information processing can be accurately performed.
(2) The imaging window 113 can be heated by just attaching the heating sheet 6, and thus workability can be improved. Also, the heating sheet 6 can be reattached. Note that the heating sheet 6 is reattached in the following cases. If normal specifications of the windshield are changed to cold region specifications, or if cold region specifications thereof are changed to normal specifications, it is possible to change specifications by reattaching the heating sheet 6 without replacing the windshield.
(3) Because the heating layer 62 is formed on substantially the entire surface of the first base film 61 in the heating sheet 6, the glass plates 11 and 12 can be heated by the entire surface of the heating sheet 6, and the entire imaging window 113 can be heated uniformly. Also, the entire first base film 61 can be warmed due to heat transferred from the heating layer 62. Therefore, the first base film 61 functions as a heat reservoir, and the glass plates 11 and 12 can be further uniformly heated by the entire surface of the heating sheet 6.
(4) Because the heating sheet 6 is formed in a trapezoidal shape and is not rectangular, it is possible to form the space between side edges of the mask layer 110 and the vicinity of the upper side of the heating sheet. Thus, this space can be used as a space for fixing the bracket 50 by an adhesive or a piece of double-sided tape. That is, the bracket 50 can be fixed to the mask layer 110 in a wider region, and thus the bracket 50 can be firmly fixed.
(5) Because the heating sheet 6 is covered by the bracket 50 or the cover thereof, the heating sheet 6 cannot be seen from the vehicle interior side. Also, it is possible to prevent a passenger from coming into contact with the heating sheet 6.
(6) Because the antifog sheet 7 is also attached in addition to the heating sheet 6, the antifog sheet 7 can suppress the laminated glass 10 from fogging up, even if power is not supplied to the heating sheet 6. In particular, an upper portion that is located inside the vehicle and is provided with the imaging window 113 is likely to be cool and fog up even if a heating device is on. Therefore, it is advantageous that the antifog sheet 7 is provided at such a position. Also, since the imaging window 113 is covered by the bracket and the cover, there is an issue that warm air from a heating device or a defroster is unlikely to reach the imaging window 113. Also, there is an issue that air in the space covered by the bracket and the cover cannot be easily exchanged with air outside of this space, and thus, when the humidity of the air in the space reaches saturation, water droplets are likely to adhere to the surface of the glass plates. Thus, it is advantageous to provide the antifog sheet 7 in the space covered in the above-described manner. By providing the antifog sheet 7 in this manner, power need not be constantly supplied to the heating sheet 6, and the amount of heat generated by the heating sheet 6 can be reduced, and thus the power consumption of the heating sheet 6 can be reduced.
(7) Because the heating sheet 6 is interposed between the laminated glass 10 and the antifog sheet 7, it is possible to suppress heat dissipation from the heating sheet 6 to the vehicle interior side, and to facilitate heat transfer to the laminated glass 10. As a result, fog removal and defrosting can be performed in a short period of time. In this case, the second base film 72 of the antifog sheet 7 corresponds to a cover member of the present invention. Note that as a result of a portion of the heating sheet 6 being covered by the antifog sheet 7, it is possible to increase the amount of heat dissipated from the portion not covered by the antifog sheet 7 to the vehicle interior side. Accordingly, heat, which is generated in the heating sheet 6 and applied to the laminated glass 10, is adjusted, and the temperature gradient of the laminated glass 10 can be made slight. As a result, it is possible to prevent cracking of the laminated glass 10.
(8) Because the antifog sheet 7 is provided with the second adhesive layer 71, when the heating sheet 6 is covered by the antifog sheet 7, the level difference between the heating sheet 6 and the inner glass plate 12 can be absorbed by the second adhesive layer 71, or the level difference between the heating sheet 6 and the mask layer 110 can be absorbed by the second adhesive layer 71. That is, it is possible to bring the level difference and the second adhesive layer 71 into intimate contact with each other without a gap. As a result, it is possible to prevent trapping of air that occurs due to the level difference.

### B. Second Embodiment

Next, a second embodiment of a windshield according to the present invention will be described. The second embodiment is different from the first embodiment in the configuration of the heating sheet 6, and the other configurations are the same as those of the first embodiment and thus are not described.

As shown in FIG. 8, a heating sheet 6 according to the second embodiment is different from that in the first embodiment in the configuration of electrodes, in particular. Specifically, although a first electrode 81 on the upper side of a heating layer 62 is formed in a single strip shape, a second electrode disposed on the lower side is constituted by a plurality of split electrodes 821 to 822 with the same width in the right-left direction. In this embodiment, as shown in FIG. 8, as an example, five split electrodes are formed. Here, for convenience of description, from the left to the right in FIG. 8, first, second, third, fourth, and fifth split electrodes are disposed at substantially equal intervals in the stated order. Although the dimension and positions of the heating layer 62, the first electrode 81, and the split electrodes 821 to 825 are shown in FIG. 8, these are examples for convenience of description, and the present invention is not limited to this.

In the heating sheet 6 according to this embodiment, the length of the upper side (the first side) of the heating layer 62 is different from the length of the lower side (the second side) of the heating layer 62, and thus the distance of a current flowing between the upper side and the lower side is not constant. The length of a first line 621 connecting the center of the upper side and the center of the lower side shown in FIG. 8 is different from the length of a lateral side 620 of the heating layer 62, for example. If the distance between the upper side and the lower side, that is, the distance between two electrodes is not constant in this manner, a heat generation distribution may become uneven. In particular, there is a risk that an insufficient amount of heat may be generated in the vicinity of a lower end portion of a long lateral side 620. In view of this, in this embodiment, as shown in FIG. 8, the five split electrodes 821 to 825 are equally disposed on the lower side of the heating layer 62, and these electrodes are connected to a power source (not shown) in parallel therewith. Hereinafter, the aspect illustrated in FIG. 8 is referred to as a first aspect.

More specifically, the width of the first electrode 81 and the width of the second electrode 82 in the right-left direction are respectively equal to the lengths of the upper side and the lower side of the heating layer 62 in the first embodiment, and thus the widths of the two electrodes 81 and 82 are different from each other. However, in this first aspect, the width of the first electrode 81 and the width of the second electrode 82 are substantially the same. That is, the width of the first electrode 81 is substantially the same as the sum of the widths of the five split electrodes 821 to 825. However, the width of the first electrode 81 and the sum of the widths of the five split electrodes 821 to 825 need not be completely the same, and the width of the first electrode 81 may be 0.8 to 1.2 times the sum of the widths of the five split electrodes 821 to 825. In the example shown in FIG. 8, the length of the first electrode 81 is 75 mm, and the sum of the widths of the five split electrodes 821 to 825 is 75 mm (15 mm * 5), and thus, the length of the first electrode 81 and the sum of the widths thereof are the same, for example. As a result, it is possible to suppress unevenness in the heat generation distribution of the heating layer 62.

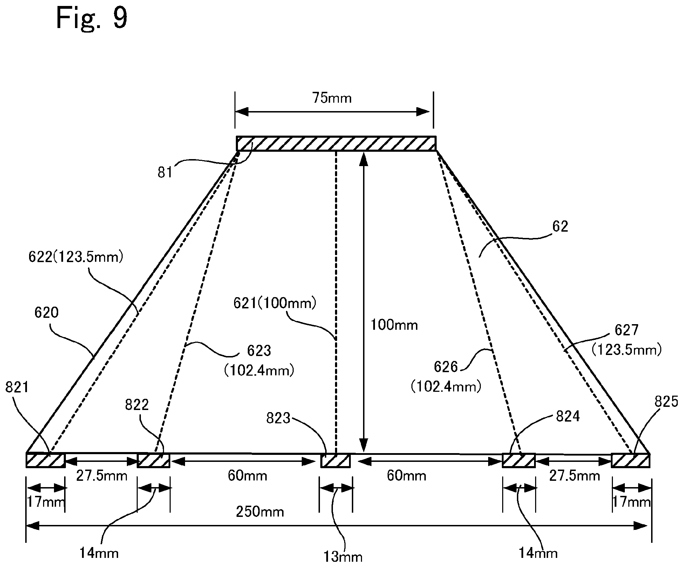

Next, a second aspect will be described in detail. As shown in FIG. 9, in the second aspect, the positions and the widths of the split electrodes 821 to 825 are set according to the lengths of the upper side and the lower side thereof. That is, a split electrode, which is disposed at a position where the length of the shortest distance between the upper side and the lower side is the shortest, has a smaller width. As shown in FIG. 9, for example, the width of the third split electrode 823 present on the first line 621 is 13 mm, and the width of the first split electrode 821 located in contact with the lateral side 620 is 17 mm. Note that shortest distance from the first split electrode 821 to the upper side refers to the shortest distance between the center of the first split electrode 821 in the right-left direction and the upper side, and a line having this shortest distance is referred to the second line 622, here. The shortest distance refers to the shortest distance from the center of each of the split electrodes 821 to 825 in the right-left direction to the upper side in this manner. FIG. 9 shows the lengths of the shortest distances. Also, the width of the second split electrode 822 disposed on the third line 623 present between the first line 621 and the second line 622 is set to 14 mm.

If this point is specified more specifically, the width of the split electrodes can be set as follows, for example. First, a split electrode in which the shortest distance L to the upper side of the heating layer 62 is the longest is defined as a reference split electrode. Also, each split electrode can be set such that 0.8 < W/T < 1.2 (Formula (1)) holds true, where WO is the width of the reference split electrode, L0 is the shortest distance between the reference split electrode and the first electrode, and T = L/L0*WO holds true. As a result, it is possible to further suppress unevenness in the heat generation distribution of the heating layer 62.

In the example shown in FIG. 9, the first split electrode 821 serves as the reference split electrode, L0 is the second line 622 and is about 123 mm, and WO is 17 mm. Here, with regard to the third split electrode 823, the shortest distance L is 100 mm, and thus, T is 12.8. Also, the width of the third split electrode 823 is 13 mm, and thus Formula (1) above is satisfied.

Also, the positions of the split electrodes 821 to 825 are disposed according to the shortest distances between the split electrodes 821 to 825 and the upper side. When a distance L4 of the fourth line 624 connecting the second split electrode 822 and the upper side in FIG. 8 is compared to a distance L3 of the third line 623 connecting the second split electrode 822 and the upper side in FIG. 9, for example, the third line 623 shown in FIG. 9 is longer than the fourth line 624 (L3 > L4). Therefore, in the second aspect, the second split electrode 822 is disposed at a position where the shortest distance is increased.

Furthermore, in addition to the widths and the positions of the split electrodes, voltages applied to the split electrodes can be adjusted. That is, the voltages applied to the split electrodes 821 to 825 can be configured to decrease as the shortest distance described above decreases. Accordingly, it is also possible to further suppress unevenness in the heat generation distribution of the heating layer 62.

More specifically, each split electrode can be set such that, when a split electrode in which the shortest distance L to the upper side of the heating layer 62 is the longest is defined as a reference split electrode, the shortest distance between the reference split electrode and the upper side is defined as L0, a voltage applied to the reference split electrode is defined as V0, and S = (L*W)/(L0*WO)*V0 holds true, 0.8 < W/S < 1.3 (Formula (2)) holds true. As a result, it is possible to further prevent unevenness in the heat generation distribution of the heating layer 62.

Specifically, in the above-described electrode arrangements shown in FIGS. 8 and 9, voltages applied to the split electrodes 821 to 825 can be set as follows. Note that the voltage applied to the first electrode 81 is set to 0V in the following case.

**Table 2**

| | First split electrode | Second split electrode | Third split electrode | Fourth split electrode | Fifth split electrode |
|---|---|---|---|---|---|
| Third aspect (electrode arrangement shown in FIG. 9) | 13.60 V | 10.87 V | 10.62 V | 10.87 V | 13.60 V |
| Fourth aspect (electrode arrangement shown in FIG. 10) | 13.60 V | 11.34 V | 10.67 V | 11.34 V | 13.60 V |

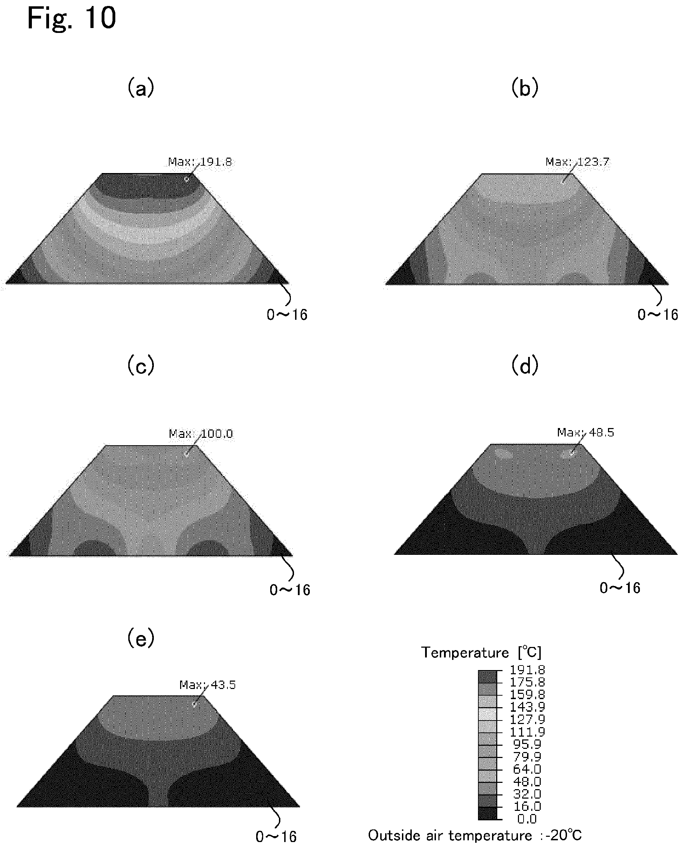

Here, temperature distributions in the heating sheets 6 having the heating layers 62 according to the first to fourth aspects set as described above, and the first embodiment were calculated through simulation. Here, in the first and second aspects, the heating layer 62 and the electrodes 81, and 821 to 825 with the dimensions shown in FIGS. 8 and 9 are provided. In these first and second aspects, 0 V was applied to the first electrode 81, and 13.6 V was applied to the split electrodes 821 to 825. Also, the third aspect and the fourth aspect are as shown in Table 2 described above. Furthermore, tests were conducted on the first embodiment. That is, the first electrode 81 and the second electrode 82, which respectively extend along the entire upper side and lower side, are disposed on the heating layer 62 with the size shown in FIG. 8, and 0 V was applied to the first electrode, and 13.6 V was applied to the second electrode. Also, in these examples, all of the resistances of the heating layers 62 were set to 5 Ω/□*.* The results thereof are shown in FIG. 10 and Table 3.

**Table 3**

| | Drawing | Maximum Temperature (°C) | Minimum Temperature (°C) | Temperature difference (°C) | Power (W) |
|---|---|---|---|---|---|
| First embodiment | Fig. 10 (a) | 162.9 | -3.6 | 166.5 | 46.7 |
| First aspect | Fig. 10(b) | 140.6 | 3.0 | 137.6 | 42.4 |
| Second aspect | Fig. 10 (c) | 132.1 | 6.7 | 125.4 | 40.8 |
| Third aspect | Fig. 10 (d) | 100.7 | 17.5 | 83.2 | 34.9 |
| Fourth aspect | Fig. 10 (e) | 97.2 | 18.0 | 79.2 | 34.2 |

According to the above-described simulation, in the first embodiment, the temperature difference is large in the heating layer 62, and a large amount of power is also consumed. In contrast, in the order of the first aspect, the second aspect, the third aspect, and the fourth aspect, the temperature difference and power consumption are reduced in the heating layer 62. Also, it can be seen that, as shown in FIG. 10, in the fourth aspect, the temperature distribution is more even than that in the other examples.

### C. Modified Examples

Although the embodiment of the present invention has been described above, the present invention is not limited to the above-described embodiment, and various modifications can be carried out without departing from the invention. The scope of protection of the current invention is defined by the appended claims.
(1) The shapes of the first base film 61 and the heating layer 62 in the heating sheet 6 and the electrodes 81 and 82 are not particularly limited, and may be any shape other than a trapezoidal shape except for a rectangular shape, and can be determined as appropriate according to the shape of the imaging window. Therefore, the shape of the imaging window 113 need not be a trapezoidal shape, and can be changed as appropriate as long as images can be taken by the imaging device 2. Note that a "rectangular shape" here refers to a shape that mainly has four sides and in which adjacent sides are orthogonal to each other. Therefore, adjacent sides need not be connected to each other so as to be orthogonal to each other, and a configuration may be adopted in which corner portions connecting adjacent sides are formed in an arc shape, or one or more short sides that intersect with adjacent sides are provided between these adjacent sides, for example. Also, each side need not be an exact straight line, and may be formed in a straight shape extending in one direction as a whole. At least a portion of each side may be formed in a wavy shape, for example. Therefore, the heating sheet 6 according to the present invention may have such a shape other than a rectangular shape, and may also be formed in a polygonal shape in addition to the above-described trapezoidal shape. Also, it is preferable that the heating sheet 6 has opposing sides on which two electrodes are disposed. If the heating sheet 6 has two sides, it is preferable that the lengths of the sides are defined so as to satisfy the above-described Formula (A).
(2) The heating layer 62 can be directly layered on the inner glass plate 12 without using the first base film 61 and the first adhesive layer 63.
(3) Although the second electrode 82 is split in the second embodiment, the number of split electrodes is not particularly limited. However, the number of split electrodes is preferably three or more. This is because, if split electrodes are provided at both sides of one side of the heating sheet 6, the center thereof is unlikely to be heated, and thus, it is preferable that split electrodes are disposed at least at both ends and the center. Furthermore, the first electrode 81 can also be split. In this case as well, it is possible to apply various provisions described in the above-described second embodiment. Also, although electrodes are provided on the upper side and the lower side of the heating layer 62 in the above-described embodiments, electrodes need only be provided on substantially opposing sides of the heating layer 62. In addition, there is no limitation on the electrodes according to the above-described embodiments, and a power supply part for supplying power to a heating element may be provided.
(4) An infrared reflective film can be added to the layer configuration shown in FIG. 6 in the above-described embodiment. A transparent infrared reflective film can be disposed between the second base film 72 and the antifog layer 73 in the antifog sheet 7 shown in FIG. 6, for example. Alternatively, an infrared reflective film can also be disposed between the heating sheet 6 and the antifog sheet 7 in FIG. 6. Accordingly, heat generated from the heating sheet 6 is reflected by the infrared reflective film, and thus it is possible to increase heat applied to the laminated glass 10 side. Note that because the radiant intensity peak wavelength at around 300 K (about 26°C) is 7 µm, in order to obtain such an effect of reflecting heat to the laminated glass 10 side, it is sufficient to provide an infrared reflective film that reflects a wavelength of 1 µm or more, for example.
(5) Although the heating sheet 6 is covered by the antifog sheet 7 in the above-described embodiment, the antifog sheet 7 is not necessarily required. That is, at least a portion of the heating sheet 6 need only be covered by a bracket and a cover.
(6) The heating sheet 6 can also be covered by a cover member instead of the antifog sheet 7. The cover member can be made of the same material as that of the second base film 72 of the antifog sheet 7, and can be attached onto the heating sheet 6 due to an adhesive layer (a third adhesive layer) that has the same material and physical properties as those of the above-described first or second adhesive layer, for example. As a result, it is possible to suppress heat dissipation from the heating sheet 6 to the vehicle interior side. Alternatively, the cover member can be attached to the heating sheet 6 via the adhesive layer (the third adhesive layer), and the antifog sheet 7 can also be attached thereon. Note that the cover member can be disposed on the heating sheet, or can protrude from the heating sheet and be disposed on a glass plate or a mask layer 110. Therefore, the third adhesive layer may be disposed on the level difference between the heating layer 62 and an electrode (a power supply part), the level difference between the glass plate and the mask layer, or the level difference between the first base film and an electrode, and in this case, the third adhesive layer can have the same thickness or adhesiveness as the above-described first adhesive layer or the above-described second adhesive layer.
(7) The heating layer 62 can also be directly attached to the laminated glass via an adhesive layer. In this case, the heating layer 62 can be covered by the above-described first base film 61. Furthermore, it is also possible to attach the antifog sheet 7 thereon.
(8) A portion or the entirety of the mask layer 110 may be constituted by a blocking film that is attachable to the laminated glass 10, and the field of view from the outside of the vehicle may be blocked by the blocking film. Note that if the blocking film is attached to a surface on the vehicle exterior side of the inner glass plate 12, the blocking film can be attached before preliminary bonding or after permanent bonding.
   Also, from the viewpoint of preventing a path of light in the laminated glass 10 from fogging up, the mask layer 110 is not necessarily required, and it is sufficient that the heating sheet 6 and the antifog sheet 7 are attached to a region (the imaging window: information acquisition region) through which light passes. Also, glass other than a laminated glass can be adopted as the glass body according to the present invention, and a single glass plate can also be used as a glass body.
(9) In the above-described embodiment, the imaging device 2 that has a camera is used as the information acquisition device of the present invention, but there is no limitation to this, and various information acquisition devices can be used. That is, there is no limitation as long as the information acquisition device emits and/or receives light in order to acquire information from the outside of the vehicle. Various devices can be used such as a light receiving device for receiving signals from the outside of the vehicle that are emitted by a laser radar, a light sensor, a rain sensor, an optical beacon, or the like. Also, an opening such as the above-described imaging window 113 can be set in the mask layer 110 as appropriate according to the type of light, and it is also possible to provide a plurality of openings. If a stereo camera is provided, for example, the mask layer 110 is provided with two imaging windows, and an antifog sheet is attached to each imaging window, for example. Note that an information acquisition device may be in contact or need not be in contact with glass. Also, the entire periphery of the imaging window 113 need not be closed, and may have a shape in which a portion thereof is open.

### List of Reference Numerals

- 1: Laminated glass
- 11: Outer glass plate
- 12: Inner glass plate
- 13: Interlayer
- 110: Mask layer
- 113: Imaging window (opening portion)
- 61: First base film
- 62: Heating layer (heating element)
- 63: First adhesive layer
- 7: Antifog sheet
- 71: Second adhesive layer
- 72: Second base film
- 73: Antifog layer

## Claims

1. A windshield to which an information acquisition device configured to acquire information from the outside of a vehicle by emitting and/or receiving light is attachable via a bracket, the windshield including:
a glass module that includes a glass body (10) having an information acquisition region through which the light passes;
a sheet-shaped heating element (62) that is attached to a surface on a vehicle interior side of the glass body (10) and is not rectangular; and
a power supply part configured to supply power to the heating element (62), **characterized in that**:
the power supply part includes a first electrode (81) and a second electrode (82) that is opposite to the first electrode (81),
the heating element (62) has a first side where the first electrode (81) is disposed, and a second side where the second electrode (82) is disposed,
a length a of the first side and a length b of the second side satisfy 0.15 ≤ a/b < 1,
the first electrode (81) and the second electrode (82) are each formed in a strip shape extending along the upper side and the lower side of the heating element (62), and
the second electrode (82) is constituted by a plurality of split electrodes (821-825).

2. The windshield according to claim 1,
wherein the glass module further includes
a blocking layer (110) that is provided with an opening portion (113) where the information acquisition region is located and that is layered on the surface on the vehicle interior side of the glass body (10).

3. The windshield according to claim 1 or 2,
wherein the glass body (10) is constituted by a laminated glass.

4. The windshield according to claim 1,
wherein the glass body (10) is constituted by a laminated glass that includes
an outer glass plate (11),
an inner glass plate (12) disposed opposite to the outer glass plate (11), and
an interlayer (13) disposed between the outer glass plate (11) and the inner glass plate (12), and
the glass module further includes
a first blocking layer that is layered on a surface on the vehicle interior side of the inner glass plate (12) and is provided with a first opening portion where the information acquisition region is located, and
a second blocking layer that is layered on a surface on the vehicle interior side of the outer glass plate (11) and is provided with a second opening portion where the information acquisition region is located.

5. The windshield according to any one of claims 1 to 4,
wherein the heating element (62) is formed by a transparent conductive film.

6. The windshield according to any one of claims 1 to 5, further comprising
a cover member (72) that is provided on the surface on the vehicle interior side of the glass body (10) and covers at least a portion of the heating element (62).

7. The windshield according to claim 1, further comprising:
a cover member (72) that is provided on the surface on the vehicle interior side of the glass body (10) and covers at least a portion of the heating element (62),
wherein the glass module further includes a blocking layer (110) that is provided with an opening portion (113) that includes the information acquisition region and that is layered on the surface on the vehicle interior side of the glass body (10), and
the cover member (72) is disposed inside of the opening portion (113).

8. The windshield according to claim 1, further comprising:
a cover member (72) that is provided on the surface on the vehicle interior side of the glass body (10) and covers at least a portion of the heating element (62),
wherein the glass module further includes a blocking layer (110) that is provided with an opening portion (113) that includes the information acquisition region and that is layered on the surface on the vehicle interior side of the glass body (10), and
at least a portion of the cover member (72) is disposed so as to protrude from the inside of the opening portion (113) to the outside thereof.

9. The windshield according to any one of claims 1 to 8,
wherein the power supply part includes a first electrode (81) configured to supply power to the heating element (62) and a second electrode (82) that is a pole opposite to the first electrode (81).

10. The windshield according to claim 9,
wherein an outer edge of the heating element (62) has opposing first and second sides,
the first electrode (81) is connected to the first side,
the second electrode (82) is connected to the second side, and
the width by which the first electrode (81) is in contact with the first side is 0.8 to 1.2 times the sum of widths W by which the split electrodes (821-825) are in contact with the second side.

11. The windshield according to claim 10,
wherein each of the split electrodes (821-825) is formed such that the shorter the shortest distance L between the split electrode and the first side is, the smaller the width W of the split electrode is.

12. The windshield according to any one of claims 1 to 11, further comprising:
a first base film (61) configured to support the heating element (62); and
a first adhesive layer (63) that is formed on a surface of the first base film (61) that is opposite to the heating element (62) and that is to be fixed to at least the surface on the vehicle interior side of the glass body (10).

13. The windshield according to any one of claims 1 to 11, further comprising:
a first base film (61); and
a first adhesive layer (63);
wherein the first adhesive layer (63), the heating element (62), and the first base film (61) are layered in the stated order, and
the first adhesive layer (63) is fixed to the surface on the vehicle interior side of the glass body (10).

14. The windshield according to any one of claims 1 to 13, further comprising:
an antifog means provided on the heating element (62),
wherein the antifog means is provided with an antifog film (7) composed of a water absorbent resin.

## Patentansprüche

1. Windschutzscheibe, auf der über eine Halterung eine Informationserfassungsvorrichtung anbringbar ist, die konfiguriert ist, um durch Aussenden/Empfangen von Licht Informationen von außerhalb eines Fahrzeugs zu erfassen, wobei die Windschutzscheibe Folgendes umfasst:
ein Glasmodul, das einen Glaskörper (10) umfasst, welcher eine Informationserfassungsregion aufweist, durch die das Licht hindurchtritt;
ein folienförmiges Heizelement (62), das auf einer Oberfläche einer Fahrzeuginnenseite des Glaskörpers (10) angebracht ist und nicht rechteckig ist; und
einen Leistungsversorgungsteil, der dazu ausgelegt ist, dem Heizelement (62) Leistung zuzuführen, **dadurch gekennzeichnet, dass**:
der Leistungsversorgungsteil eine erste Elektrode (81) und eine zweite Elektrode (82), die zu der ersten Elektrode (81) entgegengesetzt ist, umfasst,
das Heizelement (62) eine erste Seite, auf der die erste Elektrode (81) angeordnet ist, und eine zweite Seite, auf der die zweite Elektrode (82) angeordnet ist, umfasst,
eine Länge a der ersten Seite und eine Länge b der zweiten Seite 0,15 ≤ a/b < 1 erfüllen,
die erste Elektrode (81) und die zweite Elektrode (82) jeweils als Streifenform ausgebildet sind, die sich entlang der Oberseite und der Unterseite des Heizelements (62) erstreckt, und
die zweite Elektrode (82) aus einer Vielzahl von geteilten Elektroden (821-825) bestehen.

2. Windschutzscheibe nach Anspruch 1,
wobei das Glasmodul ferner Folgendes umfasst
eine Sperrschicht (110), die mit einem Öffnungsabschnitt (113) bereitgestellt ist, an dem die Informationserfassungsregion angeordnet ist und die auf die Oberfläche der Fahrzeuginnenseite des Glaskörpers (10) geschichtet ist.

3. Windschutzscheibe nach Anspruch 1 oder 2,
wobei der Glaskörper (10) aus laminiertem Glas besteht.

4. Windschutzscheibe nach Anspruch 1,
wobei der Glaskörper (10) aus laminiertem Glas besteht, das Folgendes umfasst
eine Außenglasscheibe (11),
eine Innenglasscheibe (12), die zu der Außenglasscheibe (11) entgegengesetzt angeordnet ist, und
eine Zwischenschicht (13), die zwischen der Außenglasscheibe (11) und der Innenglasscheibe (12) angeordnet ist, und wobei
das Glasmodul ferner Folgendes umfasst
eine erste Sperrschicht, die auf eine Oberfläche auf der Fahrzeuginnenseite der Innenglasscheibe (12) geschichtet und mit einem ersten Öffnungsabschnitt, wo die Informationserfassungsregion angeordnet ist, bereitgestellt ist, und
eine zweite Sperrschicht, die auf eine Oberfläche auf der Fahrzeuginnenseite der Außenglasscheibe (11) geschichtet ist und mit einem zweiten Öffnungsabschnitt, wo die Informationserfassungsregion angeordnet ist, bereitgestellt ist.

5. Windschutzscheibe nach einem der Ansprüche 1 bis 4,
wobei das Heizelement (62) durch einen transparenten leitfähigen Film ausgebildet ist.

6. Windschutzscheibe nach einem der Ansprüche 1 bis 5, ferner umfassend
ein Abdeckelement (72), das auf der Oberfläche auf der Fahrzeuginnenseite des Glaskörpers (10) bereitgestellt ist und zumindest einen Teil des Heizelements (62) abdeckt.

7. Windschutzscheibe nach Anspruch 1, ferner umfassend
ein Abdeckelement (72), das auf der Oberfläche auf der Fahrzeuginnenseite des Glaskörpers (10) bereitgestellt ist und zumindest einen Teil des Heizelements (62) abdeckt,
wobei das Glasmodul ferner eine Sperrschicht (110) umfasst, die mit einem Öffnungsabschnitt (113) bereitgestellt ist, welcher die Informationserfassungsregion umfasst, und die auf die Oberfläche der Fahrzeuginnenseite des Glaskörpers (10) geschichtet ist, und wobei
das Abdeckelement (72) innerhalb des Öffnungsabschnitts (113) angeordnet ist.

8. Windschutzscheibe nach Anspruch 1, ferner umfassend:
ein Abdeckelement (72), das auf der Oberfläche auf der Fahrzeuginnenseite des Glaskörpers (10) bereitgestellt ist und zumindest einen Teil des Heizelements (62) abdeckt,
wobei das Glasmodul ferner eine Sperrschicht (110) umfasst, die mit einem Öffnungsabschnitt (113) bereitgestellt ist, welcher die Informationserfassungsregion umfasst, und die auf die Oberfläche der Fahrzeuginnenseite des Glaskörpers (10) geschichtet ist, und wobei
zumindest ein Abschnitt des Abdeckelements (72) derart angeordnet ist, dass er von dem Inneren des Öffnungsabschnitts (113) zu dem Äußeren desselben hin wegsteht.

9. Windschutzscheibe nach einem der Ansprüche 1 bis 8,
wobei der Leistungsversorgungsabschnitt eine erste Elektrode (81), die dazu ausgelegt ist, dem Heizelement (62) Leistung zuzuführen, und eine zweite Elektrode (82), die ein zu der ersten Elektrode (81) entgegengesetzter Pol ist, umfasst.

10. Windschutzscheibe nach Anspruch 9,
wobei eine Außenkante des Heizelements (62) eine erste und eine entgegengesetzte zweite Seite aufweist, wobei
die erste Elektrode (81) mit der ersten Seite verbunden ist,
die zweite Elektrode (82) mit der zweiten Seite verbunden ist und
die Breite, über welche die erste Elektrode (81) mit der ersten Seite in Kontakt ist, das 0,8- bis 1,2-Fache der Summe der Breiten W, über welche die geteilten Elektroden (821-825) mit der zweiten Seite in Kontakt sind, beträgt.

11. Windschutzscheibe nach Anspruch 10,
wobei jede aus den geteilten Elektroden (821-825) derart ausgebildet ist, dass je kürzer die kürzeste Distanz L zwischen der geteilten Elektrode und der ersten Seite ist, desto kleiner die Breite B der geteilten Elektrode ist.

12. Windschutzscheibe nach einem der Ansprüche 1 bis 11, ferner umfassend:
einen ersten Basisfilm (61), der dazu ausgelegt ist, das Heizelement (62) zu tragen; und
eine erste Haftschicht (63), die auf einer Oberfläche des ersten Basisfilms (61) ausgebildet ist, welche zu dem Heizelement (62) entgegengesetzt ist, und die zumindest auf der Oberfläche der Fahrzeuginnenseite des Glaskörpers (10) zu befestigen ist.

13. Windschutzscheibe nach einem der Ansprüche 1 bis 11, ferner umfassend:
einen ersten Basisfilm (61); und
eine erste Haftschicht (63);
wobei die erste Haftschicht (63), das Heizelement (62) und der erste Basisfilm (61) in der genannten Reihenfolge geschichtet sind, und
die erste Haftschicht (63) auf der Oberfläche der Fahrzeuginnenseite des Glaskörpers (10) befestigt ist.

14. Windschutzscheibe nach einem der Ansprüche 1 bis 13, ferner umfassend:
ein Antibeschlagmittel, das auf dem Heizelement (62) bereitgestellt ist,
wobei das Antibeschlagmittel mit einem Antibeschlagfilm (7) bereitgestellt ist, der aus einem wasserabsorbierenden Harz besteht.

## Revendications

1. Pare-brise sur lequel un dispositif d'acquisition d'informations configuré pour acquérir des informations depuis l'extérieur d'un véhicule en émettant et/ou en recevant de la lumière peut être fixé via un support, le pare-brise incluant :
un module en verre qui inclut un corps en verre (10) présentant une région d'acquisition d'informations à travers laquelle passe la lumière ;
un élément chauffant en forme de feuille (62) qui est fixé à une surface du corps en verre (10) sur un côté intérieur de véhicule et qui n'est pas rectangulaire ; et
une partie de fourniture de puissance configurée pour fournir de la puissance à l'élément chauffant (62), **caractérisé en ce que** :
la partie de fourniture de puissance inclut une première électrode (81) et une seconde électrode (82) qui est opposée à la première électrode (81),
l'élément chauffant (62) présente un premier côté où la première électrode (81) est disposée, et un second côté où la seconde électrode (82) est disposée,
une longueur a du premier côté et une longueur b du second côté satisfont 0,15 ≤ a/b < 1,
la première électrode (81) et la seconde électrode (82) sont chacune formées en forme de bande s'étendant le long du côté supérieur et du côté inférieur de l'élément chauffant (62), et
la seconde électrode (82) est constituée par une pluralité d'électrodes fendues (821-825).

2. Pare-brise selon la revendication 1,
dans lequel le module en verre inclut en outre une couche de blocage (110) qui est pourvue d'une partie d'ouverture (113) où la région d'acquisition d'informations est située et qui est stratifiée sur la surface du corps en verre (10) sur le côté intérieur de véhicule.

3. Pare-brise selon la revendication 1 ou 2,
dans lequel le corps en verre (10) est constitué d'un verre feuilleté.

4. Pare-brise selon la revendication 1,
dans lequel le corps en verre (10) est constitué d'un verre feuilleté qui inclut
une plaque de verre externe (11),
une plaque de verre interne (12) disposée à l'opposé de la plaque de verre externe (11), et
une couche intermédiaire (13) disposée entre la plaque de verre externe (11) et la plaque de verre interne (12), et
le module en verre inclut en outre
une première couche de blocage qui est stratifiée sur une surface de la plaque de verre interne (12) sur le côté intérieur de véhicule et est pourvue d'une première partie d'ouverture où se trouve la région d'acquisition d'informations, et
une seconde couche de blocage qui est stratifiée sur une surface de la plaque de verre externe (11) sur le côté intérieur de véhicule et est pourvue d'une seconde partie d'ouverture où est située la région d'acquisition d'informations.

5. Pare-brise selon l'une quelconque des revendications 1 à 4,
dans lequel l'élément chauffant (62) est formé par un film conducteur transparent.

6. Pare-brise selon l'une quelconque des revendications 1 à 5, comprenant en outre
un élément de couverture (72) qui est prévu sur la surface du corps en verre (10) sur le côté intérieur de véhicule et recouvre au moins une partie de l'élément chauffant (62).

7. Pare-brise selon la revendication 1, comprenant en outre :
un élément de couverture (72) qui est prévu sur la surface du corps en verre (10) sur le côté intérieur de véhicule et recouvre au moins une partie de l'élément chauffant (62),
dans lequel le module en verre inclut en outre une couche de blocage (110) qui est pourvue d'une partie d'ouverture (113) qui inclut la région d'acquisition d'informations et qui est stratifiée sur la surface du corps en verre (10) sur le côté intérieur de véhicule, et
l'élément de couverture (72) est disposé à l'intérieur de la partie d'ouverture (113).

8. Pare-brise selon la revendication 1, comprenant en outre :
un élément de couverture (72) qui est prévu sur la surface du corps en verre (10) sur le côté intérieur de véhicule et recouvre au moins une partie de l'élément chauffant (62),
dans lequel le module en verre inclut en outre une couche de blocage (110) qui est pourvue d'une partie d'ouverture (113) qui inclut la région d'acquisition d'informations et qui est stratifiée sur la surface du corps en verre (10) sur le côté intérieur de véhicule, et au
au moins une partie de l'élément de couverture (72) est disposée de manière à faire saillie depuis l'intérieur de la partie d'ouverture (113) vers l'extérieur de celle-ci.

9. Pare-brise selon l'une quelconque des revendications 1 à 8,
dans lequel la partie de fourniture de puissance inclut une première électrode (81) configurée pour fournir de la puissance à l'élément chauffant (62) et une seconde électrode (82) qui est un pôle opposé à la première électrode (81).

10. Pare-brise selon la revendication 9,
dans lequel un bord extérieur de l'élément chauffant (62) présente des premier et second côtés opposés,
la première électrode (81) est connectée au premier côté,
la seconde électrode (82) est connectée au second côté, et
la largeur par laquelle la première électrode (81) est en contact avec le premier côté est de 0,8 à 1,2 fois la somme de largeurs W par lesquelles les électrodes fendues (821-825) sont en contact avec le second côté.

11. Pare-brise selon la revendication 10,
dans lequel chacune des électrodes fendues (821-825) est formée de telle sorte que plus la distance L entre l'électrode fendue et le premier côté est courte, plus la largeur W de l'électrode fendue est petite.

12. Pare-brise selon l'une quelconque des revendications 1 à 11, comprenant en outre :
un premier film de base (61) configuré pour supporter l'élément chauffant (62) ; et
une première couche adhésive (63) qui est formée sur une surface du premier film de base (61) qui est opposée à l'élément chauffant (62) et qui doit être fixée sur au moins la surface du corps en verre (10) sur le côté intérieur de véhicule.

13. Pare-brise selon l'une quelconque des revendications 1 à 11, comprenant en outre :
un premier film de base (61) ; et
une première couche adhésive (63) ;
dans lequel la première couche adhésive (63), l'élément chauffant (62) et le premier film de base (61) sont stratifiés dans l'ordre indiqué, et
la première couche adhésive (63) est fixée à la surface du corps en verre (10) sur le côté intérieur de véhicule.

14. Pare-brise selon l'une quelconque des revendications 1 à 13, comprenant en outre :
des moyens antibuée prévus sur l'élément chauffant (62),
dans lequel les moyens antibuée sont pourvus d'un film antibuée (7) composé d'une résine absorbant l'eau.
